# EUROPEAN PATENT SPECIFICATION

(11) **EP 3 855 837 B1**
(45) Date of publication and mention of the grant of the patent: **19.06.2024**
(21) Application number: 19878306.0
(22) Date of filing: 01.11.2019
(51) Int. Cl.: H04L 5/00, H04W 72/0453

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 02.11.2018 CN 201811303750
(43) Date of publication of application: 28.07.2021
(73) Proprietor: HUAWEI TECHNOLOGIES CO., LTD., Shenzhen, Guangdong 518129 (CN)
(72) Inventor: LI, Xinxian, Shenzhen, Guangdong 518129 (CN); TANG, Hao, Shenzhen, Guangdong 518129 (CN); WANG, Ting, Shenzhen, Guangdong 518129 (CN); TANG, Zhenfei, Shenzhen, Guangdong 518129 (CN)
(74) Representative: Goddar, Heinz J.
(86) International application number: PCT/CN2019/115104
(87) International publication number: WO 2020/088666

(56) References cited:
- HUAWEI ET AL: "Sidelink PHY structure and procedure for NR V2X", 3GPP DRAFT; R1-1810138 , vol. RAN WG1 29 September 2018 (2018-09-29), pages 1-15, XP051517553, Retrieved from the Internet: URL:http://www.3gpp.org/ftp/tsg%5Fran/WG1% 5FRL1/TSGR1%5F94b/Docs/R1%2D1810138%2Ezip
- HUAWEI ET AL: "Summary of remaining issues on bandwidth part and wideband operation", 3GPP DRAFT; R1-1801347 , vol. RAN WG1, no. Athens, Greece 17 February 2018 (2018-02-17), XP051397511, Retrieved from the Internet: URL:http://www.3gpp.org/ftp/tsg%5Fran/WG1% 5FRL1/TSGR1%5F92/Docs/
- LENOVO ET AL: "UE minimum RF capability in NR V2X", 3GPP DRAFT; R2-1817771 , vol. RAN WG2, no. Spokane, USA; 1 November 2018 (2018-11-01), XP051481661, Retrieved from the Internet: URL:http://www.3gpp.org/ftp/tsg%5Fran/WG2% 5FRL2/TSGR2%5F104/Docs/R2%2D1817771%2Ezip

## Description

### TECHNICAL FIELD

This application relates to the field of communications technologies, and in particular, to a communications method and apparatus.

### BACKGROUND

In a wireless communications system, a terminal device and a base station perform wireless communication based on a radio communications technology. An uplink (uplink, UL) carrier is used to support uplink communication between the terminal device and the base station, and a downlink (downlink, DL) carrier is used to support downlink communication between the terminal device and the base station. In such a networking manner in which cell coverage is implemented by using a base station as a center, because the base station cannot move, flexibility of a network structure of the networking manner is limited to some extent.

With the increase of wireless multimedia services, a conventional base station-centric service provisioning mode cannot meet service requirements of a large quantity of users in different environments, a device-to-device (for example, vehicle-to-vehicle (vehicle-to-vehicle), vehicle-to-infrastructure (vehicle-to-infrastructure), and vehicle-to-user (vehicle-to-pedestrians)) communications technology emerges, and a sidelink (sidelink, SL) carrier is used to support device-to-device communication. Because the device-to-device communication can implement direct communication between different terminal devices, a relatively high data rate, a relatively low latency, and relatively low power consumption can be realized.

After the sidelink carrier is introduced, how a terminal device implements normal communication needs to be further studied.

The document "Sidelink PHY structure and procedure for NR V2X" by Huawei and HiSilicon, R1-1810138, 3GPP TSG RAN WG1 Meeting #94bis, Chengdu, China, Oct. 2018 discusses the coexistence of Uu and SL transmissions in a shared V2X carrier. It is proposed to reuse the Uu BWP concept for the SL, with SL transmission/reception occurring within an SL BWP. An SL BWP can be UE-specifically configured. SL resources can be located in an UL carrier, wherein SL transmissions are confined to active BWPs. Simultaneous transmissions of Uu and sidelink signals shall be supported, possibly with different numerologies. ATx chain can be shared between UL and SL Tx. UL BWP and SL BWP can be configured within the bandwidth of the shared RF chain. UEs with different SL RF capabilities shall be supported.

The document "Summary of remaining issues on bandwidth part and wideband operation" by Huawei and HiSilicon, R1-1801347, 3GPP TSG RAN WG1 Meeting #92, Athens, Greece, Feb. 2018 discusses simultaneous transmission of Uu UL and SL in V2X. For the case that UL and SL share the same carrier frequency, simultaneous transmission may not be allowed and one transmission should be dropped. For example, considering that the V2V traffic is road safety related information, especially some higher priority traffic, prioritizing V2V SL is supported. Vehicle equipment may have higher capability and could support simultaneous transmission of multiple BWPs. To improve the performance in NR-V2X, FDM transmission of UL and SL could be considered.
The document "UE minimum RF capability in NR V2X" by Lenovo and Motorola Mobility, R2-1817771, 3GPP TSG RAN WG2 Meeting #104, Spokane, USA, Nov. 2018 addresses that a NR V2X UE may need to send both a PUCCH/ PUSCH for Uu and a SL PSCCH/PSSCH at the same time, and possibly with different numerologies. It is proposed that the UE has at least two Rx chains (for Uu and SL Rx) and one Tx chain (for both Uu and SL Tx).

### SUMMARY

In view of this, this application provides a communications method and apparatus, to provide a BWP configuration idea and method, so that a first terminal device can communicate on a first BWP and a second BWP at the same time.

The invention is defined by the independent claims. Advantageous embodiments of the invention are given in the dependent claims.

The network device configures the BWP set for the terminal device, that is, establishes an association relationship (or a correspondence) between the first BWP and the second BWP, so that the first terminal device can communicate on the first BWP and the second BWP that are associated with each other. The foregoing manner provides a BWP configuration idea and method, so that the first terminal device can communicate on the first BWP and the second BWP at the same time.

The first terminal device reports the radio frequency bandwidth supported by the first terminal device to the network device, so that the network device can configure the BWP set based on the radio frequency bandwidth supported by the first terminal device. Because the first BWP and the second BWP in the BWP set meet the foregoing content, it can be ensured that the first terminal device sends data on a UL BWP and an SL BWP in the BWP set at the same time.

The network device configures the first BWP and the second BWP into one BWP set, that is, establishes an association relationship (or a correspondence) between the first BWP and the second BWP, so that the first terminal device can communicate on the first BWP and the second BWP that are associated with each other. The foregoing manner provides a BWP configuration idea and method, so that the first terminal device can communicate on the first BWP and the second BWP at the same time.

These aspects or other aspects of this application are clearer and comprehensible in descriptions of the following examples.

### BRIEF DESCRIPTION OF DRAWINGS

FIG. 1a, FIG. 1b, and FIG. 1c are schematic diagrams of BWP configurations in a carrier bandwidth;
FIG. 2 is a schematic diagram of a system architecture to which an embodiment of this application is applicable;
FIG. 3 is a schematic flowchart corresponding to a communication method according to Embodiment 1 of this application;
FIG. 4 is a schematic diagram of UL BWPs and SL BWPs that are configured by a network device according to an embodiment of this application;
FIG. 5a, FIG. 5b, FIG. 5c, FIG. 5d, FIG. 5e, FIG. 5f, FIG. 5g, FIG. 5h, and FIG. 5i are schematic diagrams of a UL BWP and an SL BWP that are configured by a network device according to an embodiment of this application;
FIG. 6 is a schematic interaction flowchart of a communication method;
FIG. 7 is a possible example block diagram of an apparatus; and
FIG. 8 is a schematic diagram of a communications apparatus.

### DESCRIPTION OF EMBODIMENTS

To make the objectives, technical solutions, and advantages of this application clearer, the following further describes this application in detail with reference to the accompanying drawings.

Some terms in this application are first described, to help a person skilled in the art have a better understanding.
(1) Network device: The network device may be a device that communicates with a terminal device, for example, may be a base station or a base station controller. The network device may provide communication coverage for a particular geographical area, and may communicate with a terminal device located in the coverage area (a cell). The network device may be a base transceiver station (base transceiver station, BTS) in a global system for mobile communications (global system for mobile communications, GSM) system or code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario, or the network device may be a relay station, an access point, a vehicle-mounted device, a wearable device, or a network device in a future 5G network, for example, a gNodeB (gNodeB or gNB) or a transmission reception point (transmission receiving point/transmission reception point, TRP) in new radio (new radio, NR), or the network device may be a network device in a future evolved public land mobile network (public land mobile network, PLMN). This is not limited in the embodiments of this application.
(2) Terminal device: The terminal device is a device having a wireless transceiver function, and may be deployed on land, where the deployment includes indoor or outdoor, handheld, or wearable or vehicle-mounted deployment; may be deployed on water (for example, on a ship); or may be deployed in air (for example, on an airplane, a balloon, and a satellite). The terminal device may be a mobile phone (mobile phone), a tablet (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application. The terminal device may sometimes be referred to as user equipment (user equipment, UE), an access terminal device, a UE unit, a UE station, a mobile station, a mobile console, a remote station, a remote terminal device, a mobile device, a UE terminal device, a terminal device, a wireless communications device, a UE agent, a UE apparatus, or the like.
(3) BWP: In a 5G NR system, to adapt to a bandwidth capability of a terminal device, a BWP may be configured for the terminal device in a bandwidth supported by a carrier (which may be referred to as a carrier bandwidth, and whose specific value may be 10 MHz, 15 MHz, 20 MHz, 50 MHz, 100 MHz, 400 MHz, or the like). A plurality of BWPs may be configured on one carrier, for example, four BWPs can be configured on one carrier. The BWP may also be sometimes referred to as a carrier bandwidth part (carrier bandwidth part), a subband (subband) bandwidth, a narrowband (narrowband) bandwidth, or another name. The name is not limited in this application. For ease of description, an example in which the name is the BWP is used for description. For example, one BWP includes K (K > 0) subcarriers. Alternatively, one BWP is a frequency domain resource on which N non-overlapping RBs are located, and a subcarrier spacing of the RBs may be 15 kHz, 30 kHz, 60 kHz, 120 kHz, 240 kHz, 480 kHz, or another value. Alternatively, one BWP is a frequency domain resource on which M non-overlapping resource block groups (resource block group, RBG) are located. For example, one RBG includes P (P > 0) consecutive RBs, and a subcarrier spacing (subcarrier spacing, SCS) of the RBs may be 15 kHz, 30 kHz, 60 kHz, 120 kHz, 240 kHz. 480 kHz, or another value, for example, an integer multiple of 2.

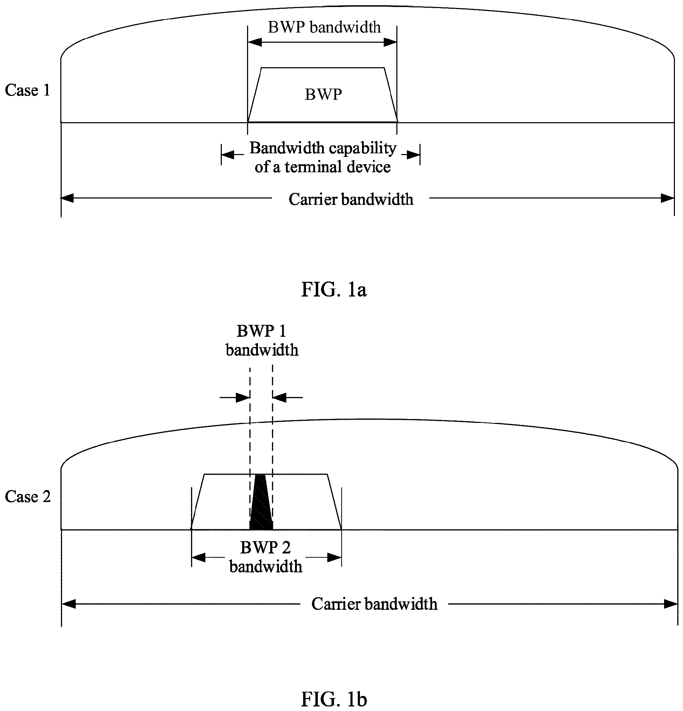

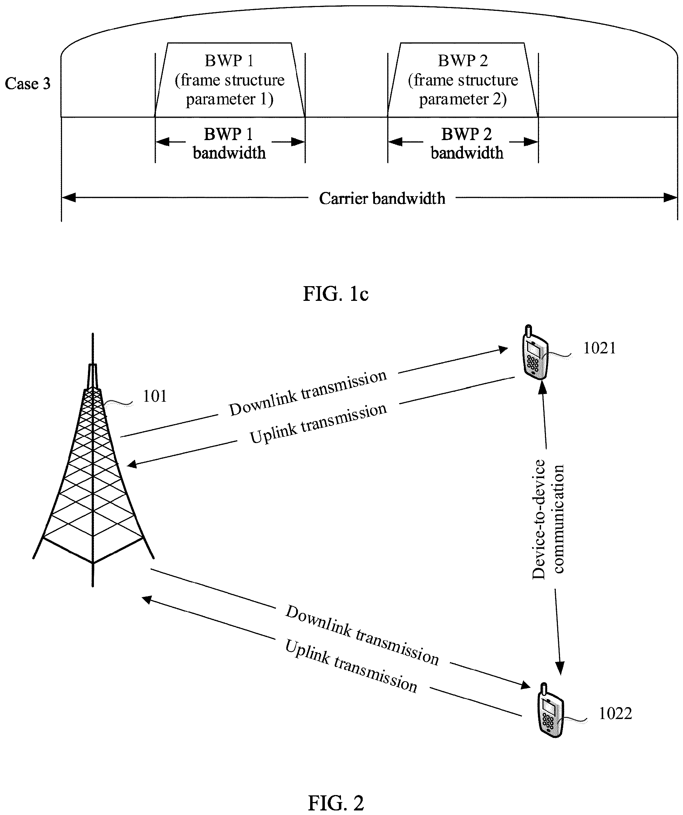

FIG. 1a to FIG. 1c show three BWP configurations in a carrier bandwidth. FIG. 1a shows a case in which one BWP is configured in the carrier bandwidth. A network device may first allocate a BWP within a bandwidth capability range of a terminal to the terminal device, and certainly, may further allocate some or all resources in the BWP to the terminal device for communication. The network device can configure different BWPs for the terminal device based on actual scenarios. For example, to reduce power consumption of the terminal device, the network device may allocate a BWP to the terminal device based on a service volume of the terminal device. When the terminal device does not need to transmit service data or needs to transmit a small amount of service data, a relatively small BWP, such as a BWP 1 shown in FIG. 1b, may be allocated to the terminal device to receive control information and a small amount of data information. When the terminal device needs to transmit a large amount of service data, a relatively large BWP, such as a BWP 2 shown in FIG. 1b, may be allocated to the terminal device. For another example, because a plurality of service types and communication scenarios may be supported in 5G, different parameters may be configured for different service types and communication scenarios. The network device may allocate a corresponding BWP to the terminal device based on different service types of the terminal device. As shown in FIG. 1c, one BWP may correspond to one service type. To meet a service requirement of the service type, a frame structure parameter (numerology) that can meet the service requirement may be configured for the BWP. It can be learned from FIG. 1b that different BWPs may occupy partially overlapping frequency domain resources. It can be learned from FIG. 1c that different BWPs may also occupy completely different frequency domain resources and use different numerologies. In this embodiment of this application, numerologies corresponding to different BWPs may be the same or may be different. This is not limited in this application. It may be understood that in FIG. 1a to FIG. 1c, an example in which one or two BWPs are configured in one carrier is used for description. During actual application, a plurality of BWPs may be configured in the carrier. This is not limited in this application.

(3) Frame structure parameter (numerology): The frame structure parameter is a parameter used in a communications system. For example, the frame structure parameter may be a series of physical layer parameters in an air interface. One BWP may correspond to one numerology. An NR system may support a plurality of numerologies, and the plurality of numerologies may be used at the same time. The numerology may include one or more of the following parameter information: a subcarrier spacing, information about a cyclic prefix (cyclic prefix, CP), information about a time unit, a bandwidth, and the like. The information about the CP may include a CP length and/or a CP type. For example, the CP may be a normal CP (normal CP, NCP) or an extended CP (extended CP, ECP). The time unit is used to indicate a time unit in time domain, and may be, for example, a sampling point, a symbol, a mini-slot (mini-slot), a slot (slot), a subframe (subframe), or a radio frame. The information about the time unit may include a type, a length, a structure, or the like of the time unit. For example, the numerology may include a subcarrier spacing and a CP. As shown in Table 1, Table 1 shows numerologies that can be currently supported in the NR system and that is defined by the subcarrier spacing and the CP.

**Table 1**

| *µ* | Subcarrier spacing = 2^{µ} × 15 (kHz) | CP type |
|---|---|---|
| 0 | 15 | Normal (normal) |
| 1 | 30 | Normal |
| 2 | 60 | Normal or extended (extended) |
| 3 | 120 | Normal |
| 4 | 240 | Normal |

*µ* is used to determine the subcarrier spacing. For example, when *µ* = 0, the subcarrier spacing is 15 kHz; when *µ* = 1, the subcarrier spacing is 30 kHz. The subcarrier spacing is used as an example. If a terminal supports subcarrier spacings of 15 kHz and 30 kHz, a network device may allocate a BWP with a subcarrier spacing of 15 kHz and a BWP with a subcarrier spacing of 30 kHz to the terminal. The terminal can switch to different BWPs for signal transmission based on different scenarios and service requirements. When the terminal supports a plurality of BWPs, numerologies corresponding to different BWPs may be the same or may be different.

The subcarrier spacing may be an integer greater than or equal to 0. For example, the subcarrier spacing may be 15 kHz, 30 kHz, 60 kHz, 120 kHz, 240 kHz, 480 kHz, or the like. A subcarrier spacing is a value of a spacing between central positions or peak positions of two adjacent subcarriers in frequency domain in an orthogonal frequency division multiplexing (orthogonal frequency division multiplexing, OFDM) system. For example, a subcarrier spacing in an LTE system is 15 kHz, and a subcarrier spacing in an NR system may be 15 kHz, 30 kHz, 60 kHz, 120 kHz, or the like.

(4) Radio frequency bandwidth and quantity of radio frequencies: A terminal device is used as an example. The terminal device may perform transmission on a radio frequency signal (that is, send or receive a radio frequency signal) through a radio frequency module. From a perspective of a physical structure, the radio frequency module may include one or more of an antenna switch module, a filter, an amplifier, a mixer, or a module such as an analog-to-digital conversion module/digital-to-analog conversion module. The radio frequency bandwidth may be understood as a maximum transmission bandwidth of a radio frequency signal, and the radio frequency bandwidth may include a transmit bandwidth and/or a receive bandwidth.

In the embodiments of this application, a radio frequency capability of the terminal device may include a radio frequency bandwidth supported by the terminal device. The radio frequency bandwidth supported by the terminal device may be understood as a maximum transmission bandwidth that is of a radio frequency signal, that is supported by the terminal device, and that is used to indicate the radio frequency capability of the terminal device. The radio frequency bandwidth supported by the terminal device may include a transmit bandwidth supported by the terminal device and/or a receive bandwidth supported by the terminal device. When a transmit bandwidth of a radio frequency signal is less than or equal to the transmit bandwidth supported by the terminal device, the terminal device can normally send the radio frequency signal. When a transmit bandwidth of a radio frequency signal is greater than the transmit bandwidth supported by the terminal device, the terminal device may fail to normally send the radio frequency signal. For example, if the terminal device sends a radio frequency signal on a BWP, the terminal device can normally send the radio frequency signal when the transmit bandwidth supported by the terminal device is greater than or equal to a bandwidth of the BWP; otherwise, the terminal device may fail to normally send the radio frequency signal. If the terminal device sends radio frequency signals on two BWPs (for example, the two BWPs do not overlap in frequency domain) at the same time, the terminal device can normally send the radio frequency signals when the transmit bandwidth supported by the terminal device is greater than or equal to a sum of bandwidths of the two BWPs and a bandwidth of a frequency band between the two BWPs; otherwise, the terminal device may fail to normally send the radio frequency signals. Similarly, when a receive bandwidth of a radio frequency signal is less than or equal to the receive bandwidth supported by the terminal device, the terminal device can normally receive the radio frequency signal. When a receive bandwidth of a radio frequency signal is greater than the receive bandwidth supported by the terminal device, the terminal device may fail to normally receive the radio frequency signal. For example, if the terminal device receives a radio frequency signal on a BWP, the terminal device can normally receive the radio frequency signal when the receive bandwidth supported by the terminal device is greater than or equal to a bandwidth of the BWP; otherwise, the terminal device may fail to normally receive the radio frequency signal. If the terminal device receives radio frequency signals on two BWPs (for example, the two BWPs do not overlap in frequency domain) at the same time, the terminal device can normally receive the radio frequency signals when the receive bandwidth supported by the terminal device is greater than or equal to a sum of bandwidths of the two BWPs and a bandwidth of a frequency band between the two BWPs; otherwise, the terminal device may fail to normally receive the radio frequency signals.

It should be noted that the radio frequency capability of the terminal device may further include a quantity of radio frequencies (including a quantity of transmit radio frequencies and a quantity of receive radio frequencies) supported by the terminal device. The quantity of transmit radio frequencies is used as an example. If the quantity of transmit radio frequencies supported by the terminal device is two, it indicates that the terminal device supports two transmit bandwidths, and each transmit radio frequency corresponds to one transmit bandwidth. In an example, the quantity of radio frequencies supported by the terminal device is related to a quantity of radio frequency modules disposed in the terminal device. For example, if one radio frequency module is disposed in the terminal device, the quantity of radio frequencies supported by the terminal device is one. If two radio frequency modules are disposed in the terminal device, the quantity of radio frequencies supported by the terminal device is two. This is not specifically limited.

In the embodiments of this application, the radio frequency capability of the terminal device may include at least one of the following: the radio frequency bandwidth supported by the terminal device, the quantity of radio frequencies supported by the terminal device, and whether the terminal device supports communication on the first BWP and the second BWP (which are specifically described below) at the same time. In another possible embodiment, the radio frequency capability of the terminal device may further include other content. This is not specifically limited.

(5) Numerals such as "first" and "second" in the embodiments of this application are merely used for differentiation for ease of description, and are not used to limit a scope of the embodiments of this application or represent a sequence. The term "and/or" describes an association relationship for describing associated objects and represents that three relationships may exist. For example, A and/or B may represent the following three cases: Only A exists, both A and B exist, and only B exists. "At least one" means one or more. "At least two" means two or more. "At least one", "any one", or a similar expression thereof means any combination of these items, including a singular item (piece) or any combination of plural items (pieces). For example, at least one (pieces or types) of a, b, or c may indicate: a, b, c, a and b, a and c, b and c, or a, b, and c, where a, b, and c may be singular or plural.

FIG. 2 is a schematic diagram of a possible architecture of a communications system to which an embodiment of this application is applicable. The communications system shown in FIG. 2 includes a network device (for example, a network device 101) and a terminal device (for example, a first terminal device 1021 and a second terminal device 1022). It should be understood that FIG. 2 is merely a schematic diagram of an architecture of the communications system. A quantity of network devices and a quantity of terminal devices in the communications system are not limited in this embodiment of this application. In addition to the network device and the terminal device, the communications system to which this embodiment of this application is applicable may further include another device such as a core network device, a wireless relay device, and a wireless backhaul device. This is not limited in this embodiment of this application either. In addition, the network device in this embodiment of this application may integrate all functions into one independent physical device, or may distribute the functions on a plurality of independent physical devices. This is not limited in this embodiment of this application either. In addition, the terminal device in this embodiment of this application may be connected to the network device in a wireless manner.

A communications system to which the foregoing system architecture is applicable includes but is not limited to: time division duplex-long term evolution (Time Division Duplexing-Long Term Evolution, TDD LTE), frequency division duplex-long term evolution (Frequency Division Duplexing-Long Term Evolution, FDD LTE), long term evolution-advanced (Long Term Evolution-Advanced, LTE-A), and various future evolved wireless communications systems (for example, a 5G NR communications system).

The system architecture and a service scenario described in the embodiments of this application are intended to describe the technical solutions in the embodiments of this application more clearly, and do not constitute a limitation on the technical solutions provided in the embodiments of this application. A person of ordinary skill in the art may learn that: With evolution of the communications system architecture and emergence of new service scenarios, the technical solutions provided in the embodiments of this application are also applicable to similar technical problems.

In the system architecture shown in FIG. 2, the network device 101 may perform data transmission with the first terminal device 1021 and the second terminal device 1022 on an air interface resource. The air interface resource may include a time domain resource, a frequency domain resource, and a code domain resource. Specifically, when the network device and the terminal device perform data transmission, the network device may allocate, by using control information, resources of a data channel, for example, a physical downlink shared channel (physical downlink shared channel, PDSCH) or a physical uplink shared channel (physical uplink shared channel, PUSCH), to the terminal. For example, the control information may indicate a symbol and/or an RB to which the data channel is mapped. The network device and the terminal device perform data transmission on the allocated time-frequency resources by using the data channel. The data transmission may include downlink data transmission and/or uplink data transmission. The downlink data (for example, data carried on the PDSCH) transmission may be that the network device sends data to the terminal device, and the uplink data (for example, data carried on the PUSCH) transmission may be that the terminal device sends data to the network device. The data may be data in a broad sense, for example, may be user data, or may be system information, broadcast information, or other information.

In the system architecture shown in FIG. 2, the first terminal device 1021 and the second terminal device 1022 may perform data transmission on a sidelink resource. Similar to the air interface resource, the sidelink resource may also include a time domain resource, a frequency domain resource, and a code domain resource. Specifically, a physical channel used by the first terminal device and the second terminal device to perform data transmission may include a physical sidelink shared channel (physical sidelink shared channel, PSSCH) and/or a physical sidelink control channel (physical sidelink control channel, PSCCH). The PSSCH is used to transmit data, and the PSCCH is used to transmit control information, for example, scheduling assignment (scheduling assignment, SA) information.

In this embodiment of this application, the uplink transmission is used as an example. A data channel used by the network device and the terminal device to perform uplink data transmission may be carried on a UL carrier (for ease of description, the UL carrier is referred to as a first UL carrier for short). A data channel used by the first terminal device and the second terminal device to perform data transmission may be carried on an SL carrier. In an example, the SL carrier may be a UL carrier (for ease of description, the UL carrier is referred to as a second UL carrier for short). The first UL carrier and the second UL carrier may be a same carrier, or may be different carriers.

In a scenario in which the first UL carrier and the second UL carrier are the same carrier, the network device needs to configure a UL BWP and an SL BWP for the terminal device (for example, the first terminal device) on the UL carrier, where the UL BWP is used by the first terminal device and the network device to perform uplink communication, the SL BWP is used by the first terminal device and the second terminal device to perform communication (for example, the first terminal device sends data to the second terminal device).

It should be noted that, for communication between the first terminal device and the second terminal device, in a case, the first terminal device may send data to the second terminal device and receive data sent by the second terminal device on a same SL BWP. In this case, the SL BWP is used by the first terminal device to send and receive data. In another case, a BWP used by the first terminal device to send information to the second terminal device may be referred to as an SL transmit BWP (or another name, which is not limited), and a BWP used by the first terminal device to receive data sent by the second terminal device may be referred to as an SL receive BWP (or another name, which is not limited). In this case, the SL transmit BWP is used by the first terminal device to send data (for example, the BWP cannot be used by the first terminal device to receive data), and the SL receive BWP is used by the first terminal device to receive data (for example, the BWP cannot be used by the first terminal device to send data). In this embodiment of this application, the SL transmit BWP and the SL receive BWP may be collectively referred to as an SL BWP. In a scenario in which the first terminal device sends data to the second terminal device, the SL BWP may be specifically the SL transmit BWP. In a scenario in which the first terminal device receives data sent by the second terminal device, the SL BWP may be specifically that the SL receive BWP.

In a possible implementation, the network device may independently configure a UL BWP and an SL BWP on the UL carrier. For example, the network device configures a UL BWP 0, a UL BWP 1, an SL BWP 0, an SL BWP 1, and an SL BWP 2 for the first terminal device on the UL carrier. Because each UL BWP and each SL BWP exist independently, activation and switching of a UL BWP and an SL BWP are highly random. In this case, the first terminal device may not be able to send data on an activated UL BWP and an activated SL BWP at the same time due to a capability limitation of the first terminal device.

A network device determines first information and sends the first information to a first terminal device, where the first information is used to configure a BWP set; the BWP set includes a first BWP and a second BWP; and the first BWP is a BWP used for communication between the first terminal device and the network device, and the second BWP is a BWP used for communication between the first terminal device and a second terminal device; and correspondingly the first terminal device receives the first information and sends data on at least one first BWP and/or at least one second BWP in the BWP set. In this way, the network device configures the first BWP and the second BWP into one BWP set, that is, establishes an association relationship (or a correspondence) between the first BWP and the second BWP, so that the first terminal device can communicate on the first BWP and the second BWP that are associated with each other. The foregoing manner provides a BWP configuration idea and method, so that the first terminal device can communicate on the first BWP and the second BWP at the same time.

It should be noted that if the first terminal device supports data sending on the first BWP and the second BWP at the same time, the first BWP may be specifically a UL BWP, and the second BWP may be specifically an SL BWP (or an SL transmit BWP). If the first terminal device supports data receiving on the first BWP and the second BWP at the same time, the first BWP may be specifically a DL BWP, and the second BWP may be specifically an SL BWP (or an SLreceive BWP). If the first terminal device supports data sending on the first BWP and the second BWP at the same time, and the first terminal device supports data receiving on the first BWP and the second BWP at the same time, the first BWP may include a UL BWP and a DL BWP, and the second BWP may include an SL BWP (or an SL transmit BWP and an SL receive BWP).

### Embodiment 1

In this embodiment, a case in which a first terminal device supports data sending on a first BWP and a second BWP (the first BWP is a UL BWP, and the second BWP is an SL BWP) at the same time is mainly described in detail.

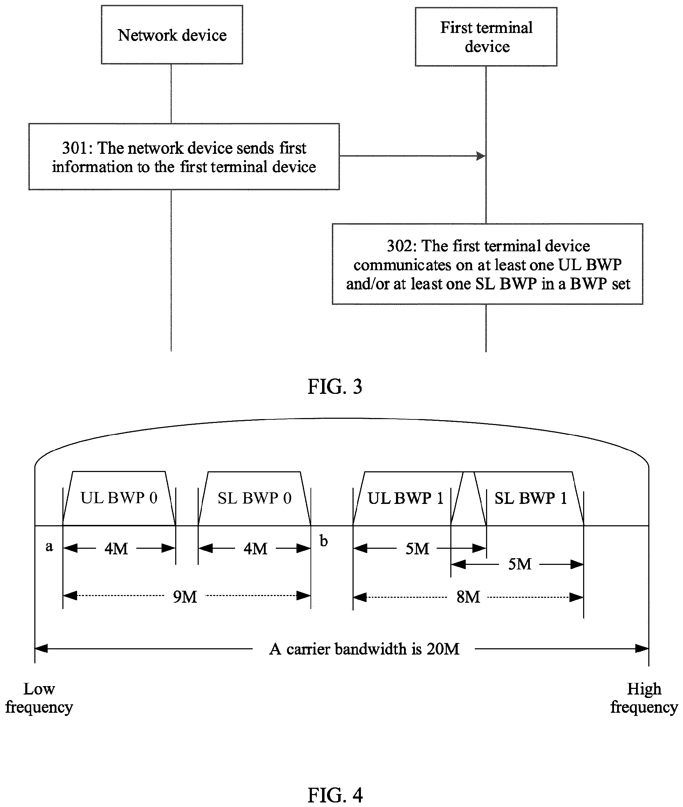

FIG. 3 is a schematic flowchart corresponding to a communication method according to Embodiment 1 of this application. As shown in FIG. 3, the method includes the following steps.

Step 301: A network device sends first information to the first terminal device, where the first information is used to configure a BWP set, and the BWP set includes the UL BWP and the SL BWP.

Herein, a channel for information transmission between the network device and the first terminal device and a channel for information transmission between the first terminal device and a second terminal device may be carried on a same UL carrier. The network device may configure one or more UL BWPs and one or more SL BWPs for the first terminal device on the UL carrier. Further, the network device configures the one or more UL BWPs and the one or more SL BWPs into one or more BWP sets.

In an example (for ease of description, example 1 for short), a BWP set may include a UL BWP and an SL BWP. Specifically, the network device allocates a UL BWP 0, a UL BWP 1, a UL BWP 2, a UL BWP 3, an SL BWP 0, an SL BWP 1, an SL BWP 2 and an SL BWP 3 to the first terminal device on the UL carrier. Table 2 describes the example 1 of BWP sets configured by the network device.

**Table 2: Example of BWP sets configured by the network device**

| BWP set | UL BWP | SL BWP | Description |
|---|---|---|---|
| BWP set 0 | UL BWP 0 | SL BWP 0 | One-to-one |
| BWP set 1 | UL BWP 1 | SL BWP 1 and SL BWP 2 | One-to-many |
| BWP set 2 | UL BWP 2 and UL BWP 3 | SL BWP 3 | Many-to-one |

In Table 2, the BWP set 0 includes the UL BWP 0 and the SL BWP 0; the BWP set 1 includes the UL BWP 1, the SL BWP 1, and the SL BWP 2; and the BWP set 2 includes the UL BWP 2, the UL BWP 3, and the SL BWP 3. In this embodiment of this application, a quantity relationship between the UL BWP and the SL BWP included in the BWP set may be one-to-one, one-to-many, many-to-one, or many-to-many. This is not specifically limited.

In another example (for ease of description, example 2 for short), a BWP set may include a UL BWP, a DL BWP, and an SL BWP. Specifically, the network device may allocate a UL BWP 0, a UL BWP 1, a UL BWP 2, a UL BWP 3, an SL BWP 0, an SL BWP 1, an SL BWP 2, and an SL BWP 3 to the first terminal device on the UL carrier. The network device may allocate a DL BWP 0, a DL BWP 1, a DL BWP 2, and a DL BWP 3 to the first terminal device on a DL carrier. Table 3 describes the example 2 of BWP sets configured by the network device.

**Table 3: Example of BWP sets configured by the network device**

| BWP set | UL BWP | SL BWP | DL BWP |
|---|---|---|---|
| BWP set 0 | UL BWP 0 | SL BWP 0 | DLBWPO |
| BWP set 1 | UL BWP 1 | SL BWP 1 and SL BWP 2 | DL BWP 1 |
| BWP set 2 | UL BWP 2 and UL BWP 3 | SL BWP 3 | DL BWP 2 and DL BWP 3 |

It should be noted that: (1) In a frequency division duplex (frequency division duplexing, FDD) system, because a UL BWP and a DL BWP may be independently configured, the network device may configure a BWP set in the manner in example 1, or may configure a BWP set in the manner in example 2. However, in a time division duplex (time division duplexing, TDD) system, because a UL BWP and a DL BWP are configured in pairs, and center frequency domain positions of the DL BWP and the UL BWP are the same, the network device may configure a BWP set in the manner in example 2. Because the UL BWP and the DL BWP in the BWP set described in example 2 always exist in pairs, the BWP set described in example 1 is mainly used as an example for description in this embodiment of this application.

(2) For the UL BWP and the SL BWP in the BWP set, there are a plurality of possible position relationships between the UL BWP and the SL BWP in frequency domain in this embodiment of this application. The UL BWP 0 and the SL BWP 0 that are described above are used as an example. In an example, a position relationship between the UL BWP and the SL BWP in frequency domain may be that the UL BWP 0 and the SL BWP 0 completely overlap in frequency domain, and the relationship includes that the UL BWP 0 completely covers the SL BWP 0 in frequency domain or the SL BWP 0 completely covers the UL BWP 0 in frequency domain. In another example, a position relationship between the UL BWP and the SL BWP in frequency domain may be that the UL BWP 0 and the SL BWP 0 partially overlap or do not overlap at all in frequency domain, including that the UL BWP 0 partially covers the SL BWP 0 in frequency domain, the SL BWP 0 partially covers the UL BWP 0 in frequency domain, or the UL BWP 0 and the SL BWP 0 do not overlap in frequency domain.

(3) For the UL BWP and the SL BWP in the BWP set, a frame structure parameter of the UL BWP and a frame structure parameter of the SL BWP are not limited in this embodiment of this application. The UL BWP 0 and the SL BWP 0 that are described above are used as an example. A frame structure parameter of the UL BWP 0 may be the same as or different from a frame structure parameter of the SL BWP 0. For example, it may be predefined that frame structure parameters of the UL BWP and the SL BWP in the BWP set are the same, or frame structure parameters of the UL BWP and the SL BWP in the BWP set are independently configured.

In this embodiment of this application, there may be a plurality of specific implementations in which the network device determines to configure the BWP set.

The first terminal device may not be able to send data on the UL BWP and the SL BWP at the same time due to a radio frequency capability limitation of the first terminal device. For example, a quantity of transmit radio frequencies supported by the first terminal device is one, and a transmit bandwidth supported by the first terminal device is 10M. For example, the network device activates both the UL BWP 0 and the SL BWP 2, and an offset value between highest frequency domain positions of the UL BWP 0 and the SL BWP 2 and lowest frequency domain positions of the UL BWP 0 and the SL BWP 2 in frequency domain is 15M (greater than 10M). In this case, the first terminal device cannot send data on the UL BWP 0 and the SL BWP 2 at the same time. For another example, the network device activates both the UL BWP 0 and the SL BWP 0, and an offset value between highest frequency domain positions of the UL BWP 0 and the SL BWP 0 and lowest frequency domain positions of the UL BWP 0 and the SL BWP 0 in frequency domain is 9M (less than 10M). In this case, the first terminal device can send data on the UL BWP 0 and the SL BWP 0 at the same time. However, if SL BWP switching (from the SL BWP 0 to the SL BWP 2) occurs, the first terminal device cannot send data on the UL BWP 0 and the SL BWP 2 at the same time. For another example, the network device activates both the UL BWP 0 and the SL BWP 0, and the first terminal device sends data on the UL BWP 0 and the SL BWP 0 at the same time. However, if UL BWP switching (from the UL BWP 0 to the UL BWP 1) occurs, and an offset value between highest frequency domain positions of the UL BWP 1 and the SL BWP 0 and lowest frequency domain positions of the UL BWP 1 and the SL BWP 0 in frequency domain is 12M (greater than 10M), the first terminal device cannot send data on the UL BWP 1 and the SL BWP 0 at the same time.

Based on this, the network device configures the BWP set based on a radio frequency capability of the first terminal device. In this way, after a sidelink carrier is introduced, the network device configures the UL BWP and the SL BWP into one BWP set based on the radio frequency capability of the first terminal device, that is, establishes an association relationship between the UL BWP and the SL BWP, so that the first terminal device can communicate normally on the UL BWP and the SL BWP that are associated with each other.

The network device configures the BWP set based on the transmit bandwidth supported by the first terminal device.

Specifically, in a case, the network device allocates the UL BWP and the SL BWP to the first terminal device and configure the BWP set on the UL carrier based on the transmit bandwidth supported by the first terminal device and according to a predefined pairing rule of the UL BWP and the SL BWP in the BWP set. For example, on the UL carrier, the network device allocates one or more UL BWPs and one or more SL BWPs to the first terminal device based on the transmit bandwidth supported by the first terminal device, and configures, according to a numbering rule, the BWP set by setting numbers for the one or more UL BWPs and the one or more SL BWPs. For example, the network device allocates two UL BWPs and two SL BWPs to the first terminal device on the UL carrier based on the transmit bandwidth supported by the first terminal device, configures a number of one UL BWP as UL BWP 0 and a number of the other UL BWP as UL BWP 1, and configures a number of one SL BWP as SL BWP 0 and a number of the other SL BWP as SL BWP 1. A UL BWP and an SL BWP with a same number form a BWP set. To be specific, the UL BWP 0 and the SL BWP 0 form a BWP set, and the UL BWP 1 and the SL BWP 1 form a BWP set. The first information may include numbers of the UL BWPs and the SL BWPs. Correspondingly, after receiving the first information, the first terminal device may determine, based on the numbers of the UL BWPs and the SL BWPs, that the UL BWP and the SL BWP with the same number form a BWP set. In this example, an example in which the BWP set includes one UL BWP and one SL BWP (in this case, the numbering rule is one-to-one) is used for description. In another possible example, the numbering rule may alternatively be one-to-many, many-to-one, or many-to-many. This is not specifically limited.

In another case, after allocating the UL BWP and the SL BWP to the first terminal device on the UL carrier, the network device may configure the BWP set based on the transmit bandwidth supported by the first terminal device and bandwidths of the allocated UL BWP and SL BWP. For example, referring to an example in FIG. 4, the network device configures a UL BWP 0 (4M), a UL BWP 1 (5M), an SL BWP 0 (4M), and an SL BWP 1 (5M), and further configures, based on the transmit bandwidth (for example, 10M) supported by the first terminal device, the UL BWP 0 and the SL BWP 0 to form a BWP set (for example, a BWP set 0), and the UL BWP 1 and the SL BWP 1 to form a BWP set (for example, a BWP set 1). The first information may include an identifier of the BWP set 0, identifiers of the UL BWP 0 and the SL BWP 0 that correspond to the identifier of the BWP set 0, an identifier of the BWP set 1, and identifiers of the UL BWP 1 and the SL BWP 1 that correspond to the identifier of the BWP set 1. Correspondingly, after receiving the first information, the first terminal device may obtain the UL BWP and the SL BWP included in each BWP set. Herein, the identifier of the BWP set may be information for identifying the BWP set, and the identifier of the UL BWP or the SL BWP may be a number of the UL BWP or the SL BWP. This is not specifically limited.

In another case, the network device may configure, on the UL carrier based on the transmit bandwidth supported by the first terminal device, a BWP set and BWP information of a UL BWP and an SL BWP that are included in the BWP set. For example, referring to the example in FIG. 4, the network device determines a BWP set 0 on the UL carrier based on the transmit bandwidth (for example, 10 M) supported by the first terminal device, and configures the UL BWP 0 and the SL BWP 0 in the BWP set. In this case, the UL BWP 0 and the SL BWP 0 form the BWP set 0. The first information may include an identifier of the BWP set 0, and identifiers of the UL BWP 0 and the SL BWP 0 that correspond to the identifier of the BWP set 0. Correspondingly, after receiving the first information, the first terminal device may obtain the UL BWP and the SL BWP that are included in the BWP set. It may be understood that one BWP set is used as an example above, and the network device may alternatively configure a plurality of BWP sets on the UL carrier based on the transmit bandwidth supported by the first terminal device.

The foregoing describes only a possible implementation in which the network device configures the BWP and indicates the BWP to the first terminal device. During specific implementation, the network device may also configure the BWP and indicate the BWP to the first terminal device in another manner. This is not specifically limited in this embodiment of this application.

In this embodiment of this application, each BWP set configured by the network device meets the following condition: An offset value between a first frequency domain position and a second frequency domain position in frequency domain is less than or equal to a radio frequency bandwidth (for example, the transmit bandwidth) supported by the first terminal device. The first frequency domain position is a highest frequency domain position of the first BWP in the BWP set in frequency domain or a highest frequency domain position of the second BWP in the BWP set in frequency domain. The second frequency domain position is a lowest frequency domain position of the first BWP in the BWP set in frequency domain or a lowest frequency domain position of the second BWP in the BWP set in frequency domain.

The following specifically describes, with reference to two examples, the condition that each BWP set configured by the network device meets.

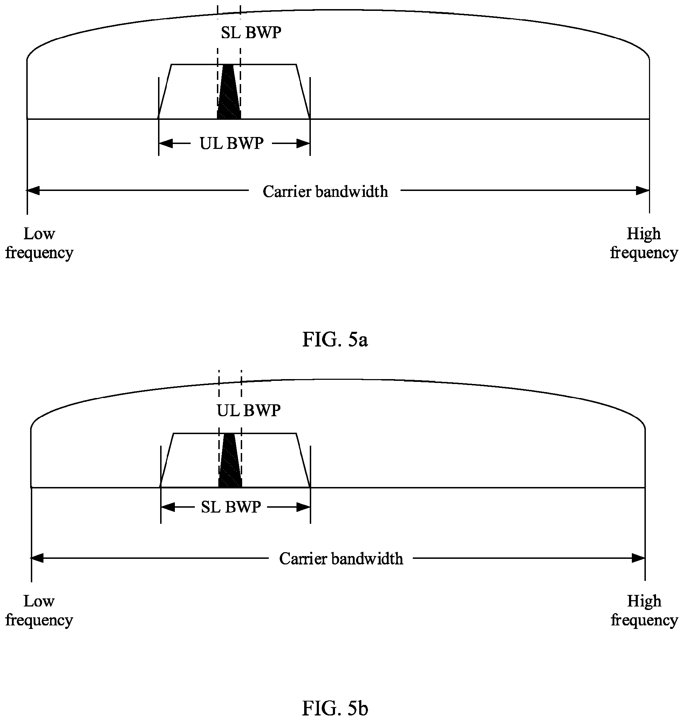

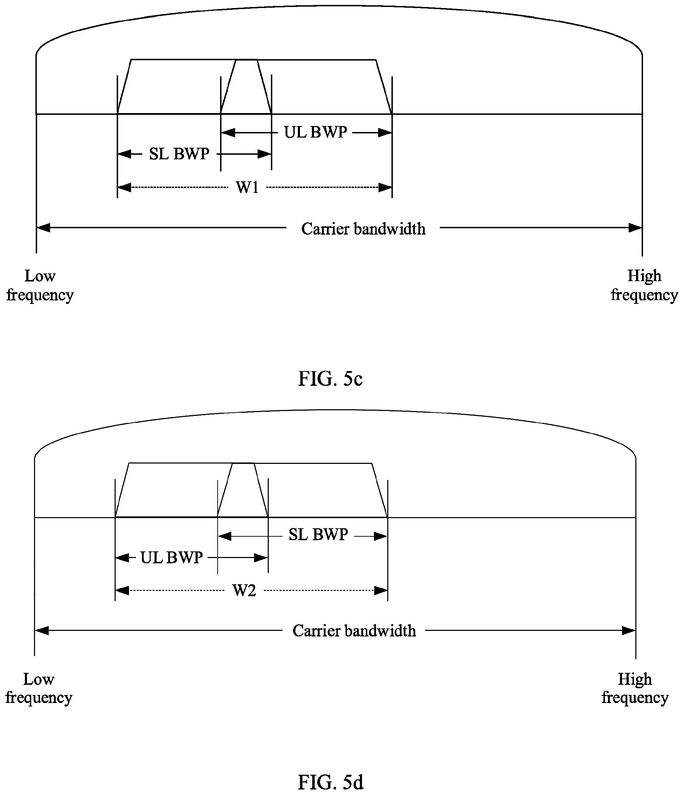

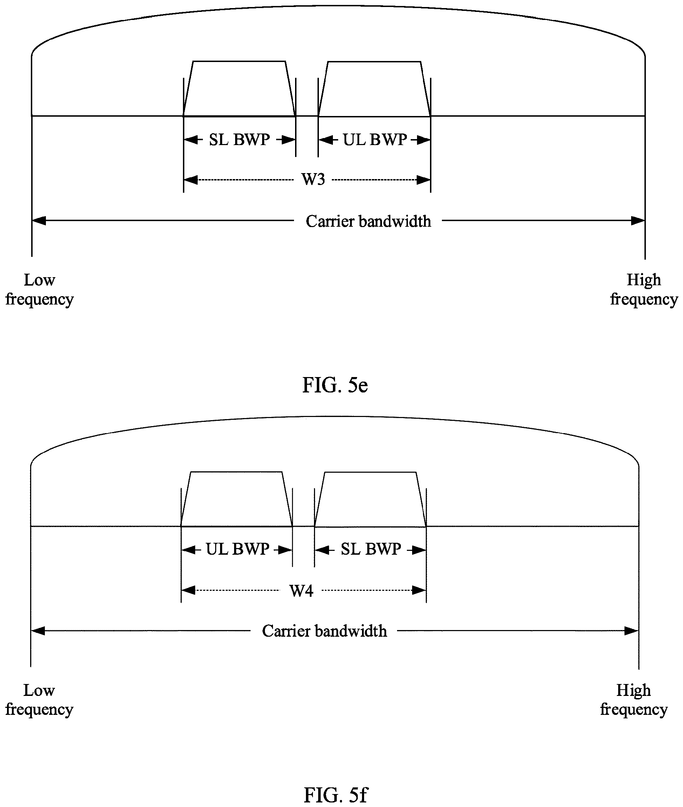

In an example (example 1 for short, where the example may be applied to a scenario in which the first terminal device supports data sending on one UL BWP and/or one SL BWP (that is, one-to-one) at the same time), the UL BWP and the SL BWP in the BWP set configured by the network device meet at least one of the following:
(1) If the UL BWP and the SL BWP completely overlap (overlap), a maximum bandwidth in bandwidths of the UL BWP and the SL BWP is less than or equal to the transmit bandwidth supported by the first terminal device. Specifically, if the UL BWP completely covers the SL BWP, as shown in FIG. 5a, a bandwidth of the UL BWP is less than or equal to the transmit bandwidth supported by the first terminal device. If the SL BWP completely covers the UL BWP, as shown in FIG. 5b, a bandwidth of the SL BWP is less than or equal to the transmit bandwidth supported by the first terminal device.
(2) If the UL BWP and the SL BWP partially overlap or do not overlap at all, an offset value between highest frequency domain positions of the SL BWP and the UL BWP and lowest frequency domain positions of the SL BWP and the UL BWP in frequency domain is less than or equal to the radio frequency bandwidth supported by the first terminal device. Specifically, when the UL BWP and the SL BWP partially overlap, as shown in FIG. 5c, if a highest frequency domain position of the UL BWP in frequency domain is higher than a highest frequency domain position of the SL BWP in frequency domain (or a lowest frequency domain position of the UL BWP in frequency domain is higher than a lowest frequency domain position of the SL BWP in frequency domain), an offset value (that is, W1) between the highest frequency domain position of the UL BWP in frequency domain and the lowest frequency domain position of the SL BWP in frequency domain is less than or equal to the radio frequency bandwidth supported by the first terminal device; as shown in FIG. 5d, if a highest frequency domain position of the UL BWP in frequency domain is lower than a highest frequency domain position of the SL BWP in frequency domain (or a lowest frequency domain position of the UL BWP in frequency domain is lower than a lowest frequency domain position of the SL BWP in frequency domain), an offset value (that is, W2) between the highest frequency domain position of the SL BWP in frequency domain and the lowest frequency domain position of the UL BWP in frequency domain is less than or equal to the radio frequency bandwidth supported by the first terminal device. When the UL BWP and the SL BWP do not overlap at all, as shown in FIG. 5e, if a lowest frequency domain position of the UL BWP in frequency domain is not lower than a highest frequency domain position of the SL BWP in frequency domain, an offset value (that is, W3) between a highest frequency domain position of the UL BWP in frequency domain and a lowest frequency domain position of the SL BWP in frequency domain is less than or equal to the radio frequency bandwidth supported by the first terminal device; as shown in FIG. 5f, if a lowest frequency domain position of the SL BWP in frequency domain is not lower than a highest frequency domain position of the UL BWP in frequency domain, an offset value (that is, W4) between a highest frequency domain position of the SL BWP in frequency domain and a lowest frequency domain position of the UL BWP in frequency domain is less than or equal to the radio frequency bandwidth supported by the first terminal device.

It should be noted that the UL BWPs in (1) and (2) each may be any UL BWP in the BWP set, and the SL BWPs in (1) and (2) each may be any SL BWP in the BWP set. That the UL BWP and the SL BWP in the BWP set configured by the network device meet at least one of (1) and (2) may be understood as that each combination (including one UL BWP and one SL BWP) formed from one or more UL BWPs and one or more SL BWPs in the BWP set meets at least one of (1) and (2).

For example, as shown in FIG. 4, the radio frequency bandwidth supported by the first terminal device is 10M, and the network device allocates the UL BWP 0 (bandwidth: 4M), the UL BWP 1 (bandwidth: 5M), the SL BWP 0 (bandwidth: 4M), and the SL BWP 1 (bandwidth: 5M) to the first terminal device on the UL carrier. In this way, because an offset value between highest frequency domain positions of the UL BWP 0 and the SL BWP 0 and lowest frequency domain positions of the UL BWP 0 and the SL BWP 0 in frequency domain is 9M (less than 10M), the network device may configure the UL BWP 0 and the SL BWP 0 into one BWP set (for example, the BWP set 0). Likewise, because an offset value between highest frequency domain positions of the UL BWP 1 and the SL BWP 1 and lowest frequency domain positions of the UL BWP 1 and the SL BWP 1 in frequency domain is 8M (less than 10M), the network device may configure the UL BWP 1 and the SL BWP 1 into one BWP set (for example, the BWP set 1). However, for another possible combination, for example, an offset value between highest frequency domain positions of the UL BWP 1 and the SL BWP 0 and lowest frequency domain positions of the UL BWP 1 and the SL BWP 0 in frequency domain is 11M (greater than 10M). Therefore, the UL BWP 1 and the SL BWP 0 are not suitable to be configured into one BWP set. It may be understood that, when the network device configures the BWP set, there may be a plurality of possible configuration results. This is not limited in this embodiment of this application.

In another example (example 2 for short, where the example may be applied to a scenario in which the first terminal device supports data sending on at least one UL BWP and/or at least one SL BWP (including one-to-one, one-to-many, many-to-one, and many-to-many) at the same time), the UL BWP and the SL BWP in the BWP set configured by the network device meet at least one of the following:
(1) An offset value between a highest frequency domain position and a lowest frequency domain position that are of the UL BWP in frequency domain is less than or equal to the radio frequency bandwidth supported by the first terminal device.
(2) An offset value between a highest frequency domain position and a lowest frequency domain position that are of the SL BWP in frequency domain is less than or equal to the radio frequency bandwidth supported by the first terminal device.
(3) If the UL BWP and the SL BWP completely overlap (overlap), a bandwidth of the UL BWP or a bandwidth of the SL BWP is less than or equal to the transmit bandwidth supported by the first terminal device.
(4) If the UL BWP and the SL BWP partially overlap or do not overlap at all, an offset value between highest frequency domain positions of the SL BWP and the UL BWP and lowest frequency domain positions of the SL BWP and the UL BWP in frequency domain is less than or equal to the radio frequency bandwidth supported by the first terminal device.

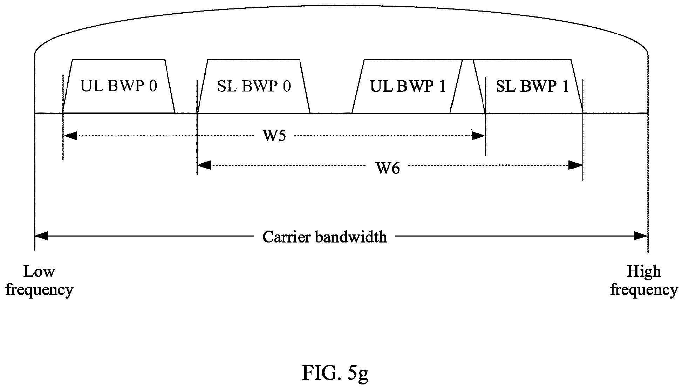

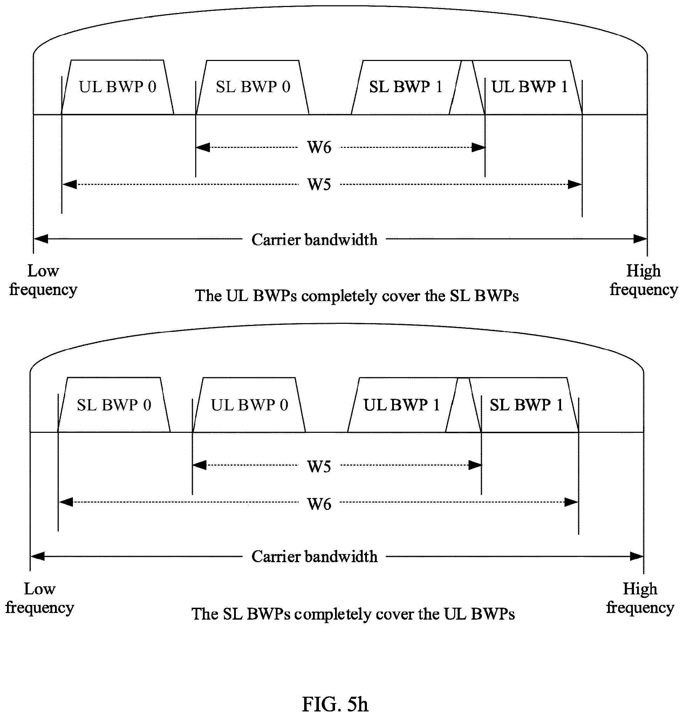

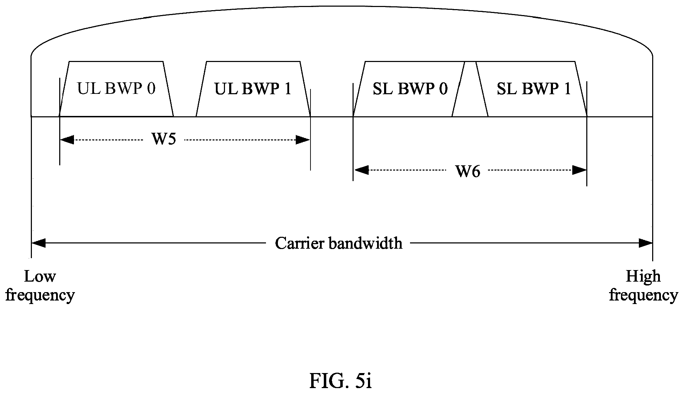

It should be noted that the UL BWPs in (1) to (4) each may refer to all UL BWPs in the BWP set (that is, all the UL BWPs are considered as a whole), and the SL BWPs in (1) to (4) each may refer to all SL BWPs in the BWP set (that is, all the SL BWPs are considered as a whole). For example, the BWP set includes a UL BWP 0, a UL BWP 1, an SL BWP 0, and an SL BWP 1. For example, referring to FIG. 5g, the offset value between the highest frequency domain position and the lowest frequency domain position that are of the UL BWP in frequency domain in (1) is W5 in FIG. 5g; and the offset value between the highest frequency domain position and the lowest frequency domain position that are of the SL BWP in frequency domain in (2) is W6 in FIG. 5g. For another example, FIG. 5h shows an example, of that described in (3), in which the UL BWP and the SL BWP completely overlap. For another example, FIG. 5g is an example, of that described in (4), in which the UL BWP and the SL BWP partially overlap; and FIG. 5i is an example, of that described in (4), in which the UL BWP and the SL BWP do not overlap at all. Further, specific implementations of (3) and (4) in the example 2 are similar to those of (1) and (2) in the example 1. For details, refer to content of (1) and (2) in the example 1. Details are not described herein again.

In this way, the network device configures the BWP set based on the radio frequency bandwidth supported by the first terminal device, so that the transmit bandwidth supported by the first terminal device can cover the at least one UL BWP and/or the at least one SL BWP in the BWP set, thereby ensuring that the first terminal device sends data on the UL BWP and the SL BWP in the BWP set at the same time.

In this embodiment of this application, the network device may obtain the transmit bandwidth supported by the first terminal device in a plurality of manners. The first terminal device sends second information to the network device, and the second information includes the radio frequency bandwidth (for example, the transmit bandwidth) supported by the first terminal device. In this way, the network device may obtain, based on the second information, the transmit bandwidth supported by the first terminal device.

It should be noted that the foregoing is described by using an example in which the network device configures, based on one transmit bandwidth supported by the first terminal device, the BWP set corresponding to the transmit bandwidth. The first terminal device may support one transmit bandwidth (in this case, the quantity of transmit radio frequencies supported by the first terminal device is one), or may support a plurality of transmit bandwidths (in this case, the quantity of transmit radio frequencies supported by the first terminal device is more than one. The first terminal device may independently perform data transmission on the UL BWP and the SL BWP, and positions of the UL BWP and the SL BWP in frequency domain are not limited either.) If the second information reported by the first terminal device includes one transmit bandwidth, for example, the second information includes an identifier of the transmit bandwidth (for example, a transmit bandwidth a) and a size of the transmit bandwidth (for example, 20M), the network device may consider by default that the quantity of transmit radio frequencies supported by the first terminal device is one. In this case, because the first terminal device supports one transmit radio frequency, to enable the first terminal device to send data on the UL BWP and the SL BWP at the same time, the network device may configure the BWP set based on the foregoing implementation. If the second information reported by the first terminal device includes a plurality of transmit bandwidths, for example, the second information includes identifiers of the transmit bandwidths (for example, a transmit bandwidth a and a transmit bandwidth b) and sizes of the transmit bandwidths (for example, a size of the transmit bandwidth a is 20M, and a size of the transmit bandwidth b is 30M), the network device may configure, in the foregoing manner based on each transmit bandwidth supported by the first terminal device, a BWP set corresponding to the transmit bandwidth (for example, the network device may configure a BWP set a1 and a BWP set a2 for the terminal device based on the transmit bandwidth a, and configure a BWP set b1 and a BWP set b2 for the terminal device based on the transmit bandwidth b), so that the first terminal device can perform data transmission on the UL BWP and the SL BWP at the same time by using one transmit radio frequency. This is not specifically limited. The identifier of the transmit bandwidth is information used to identify the transmit bandwidth. This is not specifically limited. It may be understood that the first terminal device may also report, to the network device, the quantity of transmit radio frequencies supported by the first terminal device. For example, the second information may further include the quantity of transmit radio frequencies supported by the first terminal device. This is not specifically limited.

In this embodiment of this application, the first terminal device may further report third information to the network device, and the third information is used to indicate whether the first terminal device supports data sending on the UL BWP and the SL BWP at the same time (in other words, whether the first terminal device supports sharing of one transmit bandwidth by the UL BWP and the SL BWP). If the third information indicates that the first terminal device does not support data sending on the UL BWP and the SL BWP at the same time, there may be a plurality of possible implementations. A specific implementation in this case is not limited in this embodiment of this application. If the third information indicates that the first terminal device supports data sending on the UL BWP and the SL BWP at the same time, the network device may configure the BWP set based on the foregoing implementation.

Further, because the frame structure parameters of the UL BWP and the SL BWP may be the same or may be different, that the first terminal device supports data sending on the UL BWP and the SL BWP at the same time includes the following two cases. Case 1: The first terminal device supports data sending on the UL BWP and the SL BWP that have a same frame structure parameter at the same time, but does not support data sending on the UL BWP and the SL BWP that have different frame structure parameters at the same time. Case 2: No matter whether the frame structure parameters of the UL BWP and the SL BWP are the same, the first terminal device supports data sending on the UL BWP and the SL BWP at the same time. It should be noted that there may be a plurality of specific indication manners for the third information. For example, the third information may be indicated by using two bits. For example, "00" indicates that the first terminal device does not support data sending on the UL BWP and the SL BWP at the same time, "01" indicates the foregoing case 1, and "10" indicates the foregoing case 2.

Alternatively, in this embodiment of this application, it may be predefined that the terminal device supports data sending on the UL BWP and the SL BWP that have a same frame structure parameter at the same time. In this way, the third information may be indicated by using one bit. For example, "0" indicates that the first terminal device does not support data sending on the UL BWP and the SL BWP that have different frame structure parameters at the same time, and "1" indicates that the first terminal device supports data sending on the UL BWP and the SL BWP that have different frame structure parameters at the same time.

If the network device determines, based on the third information, that the first terminal device belongs to the case 1, the network device may configure the BWP set in the foregoing manner, and further consider the frame structure parameters of the UL BWP and the SL BWP in the BWP set. For example, the network device may configure the frame structure parameters of the UL BWP and the SL BWP in the BWP set to be the same, so that it is ensured that the first terminal device can send data on the UL BWP and the SL BWP in the BWP set at the same time. For another example, the network device may also configure the frame structure parameters of the UL BWP and the SL BWP to be different. In this case, the network device may configure priorities of the frame structure parameters of the UL BWP and the SL BWP, and send the configured priorities of the frame structure parameters to the first terminal device. It may be understood that the priorities of the frame structure parameters may alternatively be pre-agreed in a protocol. This is not specifically limited. If the network device determines, based on the third information, that the first terminal device belongs to the case 2, the network device may configure the BWP set in the foregoing manner, without a need to consider the frame structure parameters of the UL BWP and the SL BWP in the BWP set.

In this embodiment of this application, there may be a plurality of implementations in which the network device sends the first information to the first terminal device. For example, the first information is carried via signaling (or a message). In an example, the network device may send the first information to the first terminal device via semi-static signaling or dynamic signaling. The semi-static signaling may be specifically radio resource control (radio resource control, RRC) signaling or media access control control element (media access control, MAC CE), and the dynamic signaling may be specifically physical layer signaling, for example, downlink control information (downlink control information, DCI).

Step 302: The first terminal device communicates on the at least one UL BWP and/or the at least one SL BWP in the BWP set.

In this embodiment of this application, a BWP (for example, the UL BWP or the SL BWP) may include two states: an activated state and an inactivated state. The activated state may be a state in which information transmission can be performed. That a BWP is in the activated state means the BWP is in a state in which information transmission can be performed on the BWP, for example, in a state in which a signal/channel can be sent or received. The inactivated state is a concept opposite to the activated state, and may refer to a state in which information transmission cannot be performed. That a BWP is in the inactivated state means the BWP is in a state in which information transmission cannot be performed on the BWP. For example, the BWP in the inactivated state cannot be used to send or receive a signal/channel.

After configuring the BWP set for the first terminal device, the network device may indicate the first terminal device to activate the at least one UL BWP and/or the at least one second BWP in the BWP set, so that the at least one UL BWP and/or the at least one second BWP are/is in the activated state, and the first terminal device may communicate on the at least one UL BWP and/or the at least one SL BWP.

There may be a plurality of specific implementations in which the network device indicates the first terminal device to activate the at least one UL BWP and/or the at least one second BWP in the BWP set.

In a possible implementation, the network device sends fourth information to the first terminal device, and the fourth information may be used to indicate to activate the at least one UL BWP in the BWP set. The first terminal device activates the at least one UL BWP in the BWP set or activates the at least one UL BWP and the at least one SL BWP in the BWP set based on the fourth information, where the fourth information may include an identifier of the at least one UL BWP (for example, a number of the UL BWP). Alternatively, the fourth information may be used to indicate to activate the at least one SL BWP in the BWP set. The first terminal device activates the at least one SL BWP in the BWP set or activates the at least one UL BWP and the at least one SL BWP in the BWP set based on the fourth information, where the fourth information may include an identifier of the at least one SL BWP (for example, a number of the SL BWP). Alternatively, the fourth information may be used to indicate to activate the at least one SL BWP and the at least one SL BWP in the BWP set. The first terminal device activates the at least one UL BWP and the at least one SL BWP in the BWP set based on the fourth information, where the fourth information may include an identifier of the at least one UL BWP and an identifier of the at least one SL BWP. The network device may send the fourth information by using an RRC message, a MAC CE, or DCI. This is not specifically limited.

For example, the BWP set includes one UL BWP (for example, a UL BWP 0) and one SL BWP (for example, an SL BWP 0). If the fourth information includes an identifier of the UL BWP 0, the first terminal device may activate the UL BWP 0 and the SL BWP 0 based on the fourth information. Only when the UL BWP 0 and the SL BWP 0 are activated at the same time, the first terminal device can perform information transmission on the SL BWP and the UL BWP at the same time.

For another example, the BWP set includes a plurality of UL BWPs (for example, a UL BWP 0 and a UL BWP 1) and one SL BWP (for example, an SL BWP 0). If the fourth information includes an identifier of the UL BWP 0, the first terminal device may activate the UL BWP 0 and the SL BWP 0 based on the fourth information. If the fourth information includes identifiers of the UL BWP 0 and the UL BWP 1, the first terminal device may activate the UL BWP 0, the UL BWP 1, and the SL BWP 0 based on the fourth information.

For another example, the BWP set includes a plurality of UL BWPs (for example, a UL BWP 0 and a UL BWP 1) and one SL BWP (for example, an SL BWP 0). Before receiving the fourth information, the UL BWP 0 and the SL BWP 0 are in the activated state, and the first terminal device performs data transmission on the UL BWP 0 and the SL BWP 0. Subsequently, the first terminal device receives the fourth information. If the fourth information includes an identifier of the UL BWP 1 (which indicates that the first terminal device needs to switch from the UL BWP 0 to the UL BWP 1), because the SL BWP 0 is already in the activated state, the first terminal device needs to activate only the UL BWP 1. Further, the first terminal device may deactivate the UL BWP 0.

For another example, the network device configures a UL BWP 0, a UL BWP 1, a UL BWP 2, an SL BWP 0, an SL BWP 1, and an SL BWP 2, and configures two BWP sets. One BWP set (a BWP set 1) includes the UL BWP 2 and the SL BWP 2, and the other BWP set (a BWP set 2) includes a plurality of UL BWPs (the UL BWP 0 and the UL BWP 1) and a plurality of SL BWPs (the SL BWP 0 and the SL BWP 1). Before receiving the fourth information, the UL BWP 2 and the SL BWP 2 are in the activated state, and the first terminal device performs information transmission on the UL BWP 2 and the SL BWP 2. Subsequently, the first terminal device receives the fourth information. If the fourth information includes an identifier of the UL BWP 1 (which indicates that the first terminal device needs to switch from the UL BWP 2 to the UL BWP 1), and the fourth information may further include an identifier of the SL BWP 0 or the SL BWP 1 (which indicates that the first terminal device needs to switch from the SL BWP 2 to the SL BWP 0 or the SL BWP 1), the first terminal device may activate the UL BWP 1 and the SL BWP 0 or the SL BWP 1 based on the fourth information. Further, the first terminal device may deactivate the UL BWP 2 and the SL BWP 2. It should be noted that the identifier of the SL BWP 0 or the SL BWP 1 included in the fourth information herein may be an index of the SL BWP 0 or the SL BWP 1 in the BWP set 2. For example, the BWP set 2 includes two SL BWPs. In this case, one bit may be used to indicate an index of the SL BWP. For example, "0" indicates an index of the SL BWP 0, and "1" indicates an index of the SL BWP 1. In this manner, a quantity of bits carried in the fourth information can be reduced, and transmission load can be reduced.

In another possible implementation, the network device may send signaling to indicate first terminal device to activate the UL BWP, and the second terminal device may send signaling to indicate first terminal device to activate the SL BWP.

For example, the network device sends fourth information to the first terminal device, and the fourth information is used to indicate to activate the at least one UL BWP in the BWP set. The second terminal device sends fifth information to the first terminal device, and the fifth information is used to indicate to activate the at least one SL BWP in the BWP set. The first terminal device activates the at least one UL BWP and the at least one SL BWP in the BWP set based on the fourth information and the fifth information.

It should be noted that, if the BWP set further includes a DL BWP, because the UL BWP and the DL BWP may be activated in pairs and switched in pairs, in the foregoing example, a DL BWP corresponding to a UL BWP may be further activated when the UL BWP is activated.

In this embodiment of this application, after determining, in the foregoing manner, that the UL BWP and the SL BWP are in the activated state, the first terminal device may perform data transmission on the activated UL BWP and the activated SL BWP. However, if frame structure parameters of the activated UL BWP and the activated SL BWP are different, and the first terminal device belongs to the foregoing case 1 (that is, the first terminal device supports data sending on the UL BWP and the SL BWP that have a same frame structure parameter at the same time, but does not support data sending on the UL BWP and the SL BWP that have different frame structure parameters at the same time), the first terminal device may choose to send data on the activated UL BWP or SL BWP based on priorities of the frame structure parameters. The priorities of the frame structure parameters may be configured by the network device and sent to the first terminal device, or may be pre-agreed in the protocol. This is not specifically limited.

For example, a frame structure parameter of the activated UL BWP is a frame structure parameter a, a frame structure parameter of the activated SL BWP is a frame structure parameter b, and a priority of the frame structure parameter a is higher than a priority of the frame structure parameter b. When the first terminal device does not support data sending on BWPs with different frame structure parameters by using one transmit radio frequency, the first terminal device may choose to send data on the activated UL BWP.

It should be noted that: (1) The foregoing Embodiment 1 mainly describes the method in this embodiment of this application based on a case in which the UL carrier and the SL carrier are a same carrier. In this case, the BWP set may include a UL BWP and an SL BWP that are located on a same UL carrier. Optionally, the BWP set may further include a DL BWP located on a DL carrier. This embodiment of this application is also applicable to a case in which the UL carrier and the SL carrier are different carriers. In this case, the BWP set may include a UL BWP located on a first UL carrier and an SL BWP located on an SL carrier (in this case, the SL carrier may be a second UL carrier different from the first UL carrier). Optionally, the BWP set may further include a DL BWP located on a DL carrier. In other words, the method in this embodiment of this application may be applied in a multi-carrier scenario, and a specific implementation is not described again.

(2) The foregoing Embodiment 1 is described only by using an example in which the first terminal device supports data sending on the first BWP and the second BWP at the same time. The method provided in this embodiment of this application may also be independently applicable to a scenario in which the first terminal device supports data receiving on the first BWP and the second BWP at the same time. For example, in this scenario, the BWP set configured by the network device for the first terminal device may include a DL BWP and an SL BWP (or an SL receive BWP). Correspondingly, the first terminal device may receive data on at least one DL BWP and/or at least one SL BWP in the BWP set. Optionally, the network device may configure the BWP set for the first terminal device based on a receive bandwidth supported by the first terminal device. It may be understood that data receiving is a process corresponding to data sending. Therefore, a specific implementation of the scenario in which the first terminal device supports data receiving on the first BWP and the second BWP at the same time is similar to that described in Embodiment 1. Based on a same idea, that the first terminal device supports data receiving on the first BWP and the second BWP at the same time may be implemented with reference to the foregoing implementation, and details are not described again.

The method provided in this embodiment of this application may be further applicable to a scenario in which the first terminal device supports data sending on the first BWP and the second BWP at the same time and the first terminal device supports data receiving on the first BWP and the second BWP at the same time. For example, in this scenario, the BWP set configured by the network device for the first terminal device may include a UL BWP, a DL BWP, and an SL BWP (or an SL transmit BWP and an SLreceive BWP). Correspondingly, the first terminal device may send data on at least one UL BWP and/or at least one SL BWP in the BWP set, and receive data on at least one DL BWP and/or at least one SL BWP in the BWP set. Optionally, the network device may configure the BWP set for the first terminal device based on a transmit bandwidth and a receive bandwidth that are supported by the first terminal device. It may be understood that, a specific implementation in this scenario may also be implemented with reference to the foregoing manner, and details are not described again.

The following describes a possible procedure interaction case of a communication method.

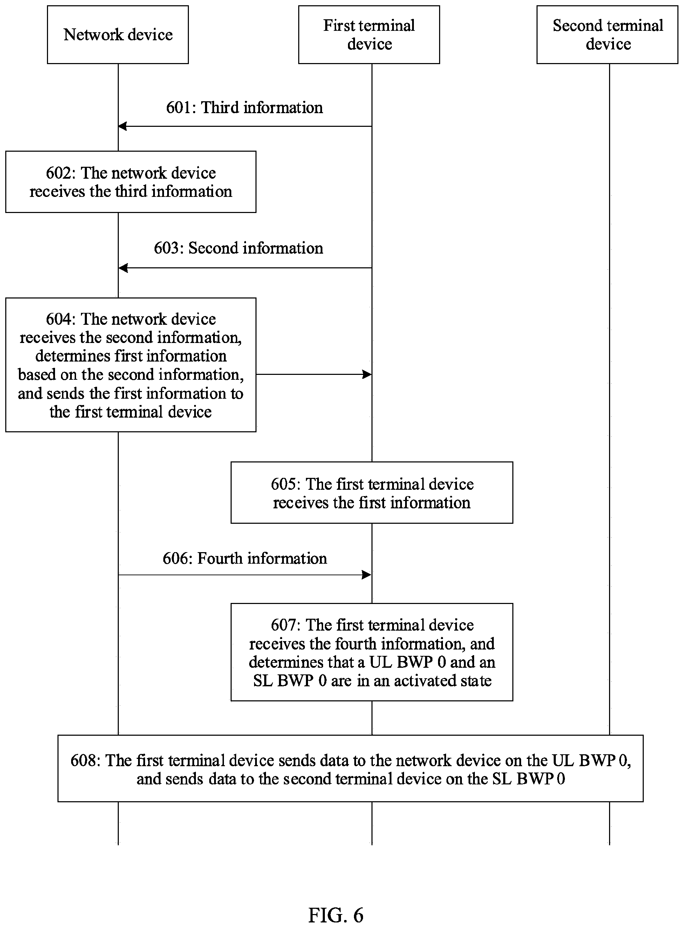

FIG. 6 is a schematic interaction flowchart of the communication method. As shown in FIG. 6, the method includes the following steps.

Step 601: A first terminal device may report third information to a network device, where the third information is used to indicate whether the first terminal device supports data sending on a UL BWP and an SL BWP at the same time.

It should be noted that if the third information indicates that the first terminal device does not support data sending on the UL BWP and the SL BWP at the same time, a subsequent process may not be performed. This case is not limited in this embodiment of this application. The following mainly describes a case in which the first terminal device supports data sending on the UL BWP and the SL BWP at the same time.

Step 602: The network device may receive the third information. Herein, the network device may determine, based on the third information, that the first terminal device supports data sending on the UL BWP and the SL BWP at the same time.

Step 603: The first terminal device reports second information to the network device, where the second information includes a transmit bandwidth supported by the first terminal device. Herein, the second information may include one or more transmit bandwidths supported by the first terminal device.

Step 604: The network device receives the second information, determines first information based on the second information, and sends the first information to the first terminal device, where the first information is used to configure a BWP set.

Herein, the network device configures a plurality of BWP sets for the first terminal device based on the second information. The second information includes one transmit bandwidth supported by the first terminal device, and the network device configures the plurality of BWP sets for the first terminal device based on the transmit bandwidth. The following mainly uses this case as an example for description. For another example, the second information may include a plurality of transmit bandwidths supported by the first terminal device, and the network device may configure the one or more BWP sets for the first terminal device based on each transmit bandwidth.

It should be noted that the third information and the second information may be sent by using a same message, or may be sent by using different messages. This is not specifically limited.

Step 605: The first terminal device receives the first information.

Step 606: The network device may send fourth information to the first terminal device, where the fourth information is used to indicate to activate at least one UL BWP (for example, a UL BWP 0) and at least one SL BWP (for example, an SL BWP 0) in the BWP set.

Step 607: The first terminal device may receive the fourth information, and determines that the UL BWP 0 and the SL BWP 0 are in an activated state.

Step 608: The first terminal device sends data to the network device on the UL BWP 0, and sends data to a second terminal device on the SL BWP 0.

It should be noted that: (1) The foregoing step numbers are merely an example of an execution procedure, and do not constitute a limitation on an execution sequence of the steps. In this embodiment of this application, there is no strict execution sequence between steps that do not have a time sequence dependency relationship with each other. (2) The foregoing example describes only a possible interaction procedure based on Embodiment 1. For a specific implementation of each step, refer to Embodiment 1. Details are not described herein again.

The foregoing mainly describes the solutions provided in this application from a perspective of interaction between the network device and the terminal device. It may be understood that, to implement the foregoing functions, the network device or the terminal device may include corresponding hardware structures and/or software modules for performing the functions. A person skilled in the art should be easily aware that, in combination with the units and algorithm steps of the examples described in the embodiments disclosed in this specification, the present invention can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

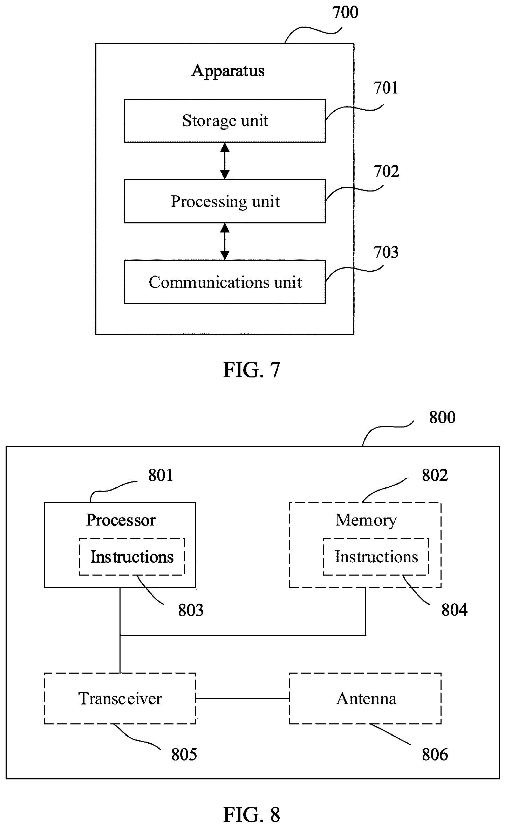

When an integrated unit is used, FIG. 7 is a possible example block diagram of an apparatus. The apparatus 700 may exist in a form of software. The apparatus 700 may include a processing unit 702 and a communications unit 703. The processing unit 702 is configured to control and manage actions of the apparatus 700. The communications unit 703 is configured to support the apparatus 700 in communicating with another network entity. The apparatus 700 may further include a storage unit 701, configured to store program code and data of the apparatus 700.

The processing unit 702 may be a processor or a controller, such as a general-purpose central processing unit (central processing unit, CPU), a general-purpose processor, a digital signal processor (digital signal processing, DSP), an application-specific integrated circuit (application specific integrated circuits, ASIC), a field programmable gate array (field programmable gate array, FPGA) or another programmable logic device, a transistor logic device, a hardware component, or any combination thereof. The processing unit 702 may implement or execute various example logical blocks, modules, and circuits described with reference to content disclosed in the present invention. The processor may be a combination of processors implementing a computing function, for example, a combination of one or more microprocessors, or a combination of the DSP and a microprocessor. The communications unit 703 may be a communications interface, a transceiver, a transceiver circuit, or the like. The communications interface is a general term. During specific implementation, the communications interface may include a plurality of interfaces. The storage unit 701 may be a memory.

The apparatus 700 may be the terminal device in any one of the foregoing embodiments, or may be a semiconductor chip disposed in the terminal device. The processing unit 702 may support the apparatus 700 in performing actions of the terminal device in the foregoing method examples. Alternatively, the processing unit 702 mainly performs internal actions of the terminal in the method examples, and the communications unit 703 may support communication between the apparatus 700 and a network device or another terminal device.

Specifically, the communications unit performs the following steps
receiving first information sent by a network device, where the first information is used to configure a BWP set; the BWP set includes a first BWP and a second BWP; and the first BWP is used for communication between the first terminal device and the network device, and the second BWP is used for communication between the first terminal device and a second terminal device; and
communicating on at least one first BWP and/or at least one second BWP in the BWP set.

In a possible design, the first BWP is used for uplink communication between the first terminal device and the network device, and the second BWP is used for uplink communication between the first terminal device and the second terminal device.

In a possible design, the BWP set further includes a third BWP, and the third BWP is used for downlink communication between the first terminal device and the network device.

The communications unit is further configured to send second information to the network device, where the second information includes a radio frequency bandwidth supported by the first terminal device.

The processing unit is configured to determine whether an offset value between a first frequency domain position and a second frequency domain position in frequency domain is less than or equal to the radio frequency bandwidth supported by the first terminal device. The first frequency domain position is a highest frequency domain position of the first BWP in the BWP set in frequency domain or a highest frequency domain position of the second BWP in the BWP set in frequency domain; and the second frequency domain position is a lowest frequency domain position of the first BWP in the BWP set in frequency domain or a lowest frequency domain position of the second BWP in the BWP set in frequency domain.

In a possible design, the communications unit is further configured to send third information to the network device, where the third information is used to indicate whether the first terminal device supports communication on the first BWP and the second BWP at the same time.

In a possible design, the communications unit is further configured to: receive fourth information, where the fourth information is used to indicate to activate the at least one first BWP or the at least one second BWP; and the first terminal device activates the at least one first BWP and the at least one second BWP based on the fourth information.

In a possible design, the processing unit is configured to determine whether frame structure parameters of the at least one first BWP and the at least one second BWP are the same. The processing unit is further configured to determine priorities of the frame structure parameters of the at least one first BWP and the at least one second BWP; and the communications unit is configured to choose to communicate on the at least one first BWP or the at least one second BWP based on the priorities.

The apparatus 700 may alternatively be the network device in any one of the foregoing embodiments, or may be a semiconductor chip disposed in the network device. The processing unit 702 may support the apparatus 700 in performing actions of the network device in the foregoing method examples. Alternatively, the processing unit 702 mainly performs internal actions of the network device in the method examples, and the communications unit 703 may support communication between the apparatus 700 and a terminal device.

Specifically, , the communications unit performs the following steps: sending the first information to a first terminal device, where the first information is used to configure a BWP set; the BWP set includes a first BWP and a second BWP; and the first BWP is used for communication between the first terminal device and the network device, and the second BWP is used for communication between the first terminal device and a second terminal device.

In a possible design, the first BWP is used for uplink communication between the first terminal device and the network device, and the second BWP is used for uplink communication between the first terminal device and the second terminal device.

In a possible design, the BWP set further includes a third BWP, and the third BWP is used for downlink communication between the first terminal device and the network device.

The communications unit is further configured to receive second information sent by the first terminal device, where the second information includes a radio frequency bandwidth supported by the first terminal device; the processing unit is specifically configured to determine the radio frequency bandwidth supported by the first terminal device; and the communications unit is further configured to send the first information to the first terminal device based on the radio frequency bandwidth.

The processing unit is configured to determine whether an offset value between a first frequency domain position and a second frequency domain position in frequency domain is less than or equal to the radio frequency bandwidth supported by the first terminal device. The first frequency domain position is a highest frequency domain position of the first BWP in the BWP set in frequency domain or a highest frequency domain position of the second BWP in the BWP set in frequency domain; and the second frequency domain position is a lowest frequency domain position of the first BWP in the BWP set in frequency domain or a lowest frequency domain position of the second BWP in the BWP set in frequency domain.

In a possible design, the communications unit is further configured to: receive third information sent by the first terminal device, where the third information is used to indicate whether the first terminal device supports communication on the first BWP and the second BWP at the same time; and send the first information to the first terminal device based on the third information if determining that the first terminal device supports the communication on the first BWP and the second BWP at the same time.

In a possible design, the communications unit is further configured to send fourth information to the first terminal device, where the fourth information is used to indicate to activate the at least one first BWP or the at least one second BWP.

FIG. 8 is a schematic structural diagram of a communications apparatus. The communications apparatus 800 may be the network device 101 in FIG. 2, or may be the terminal device 1021 or the terminal device 1022 in FIG. 2. The communications apparatus may be configured to implement the methods that correspond to the communications device and that are described in the foregoing method embodiments. For details, refer to the descriptions in the foregoing method embodiments.

The communications apparatus 800 may include one or more processors 801. The processor 801 may also be referred to as a processing unit, and may implement a control function. The processor 801 may be a general-purpose processor, a dedicated processor, or the like. For example, the processor 801 may be a baseband processor or a central processing unit. The baseband processor may be configured to process a communication protocol and communication data. The central processing unit may be configured to: control the communications apparatus (for example, a base station, a baseband chip, a distributed unit (distributed unit, DU), or a centralized unit (centralized unit, CU)), execute a software program, and process data of the software program.

In an optional design, the processor 801 may also store instructions and/or data 803. The instructions and/or data 803 may be run by the processor, so that the communications apparatus 800 performs the methods that correspond to the communications device and that are described in the foregoing method embodiments.

In an optional design, the processor 801 may include a transceiver unit configured to implement a receiving function and a sending function. For example, the transceiver unit may be a transceiver circuit or an interface. A circuit or an interface configured to implement the receiving function and a circuit or an interface configured to implement the sending function may be separated or may be integrated together.

In another possible design, the communications apparatus 800 may include a circuit, and the circuit may implement a sending function, a receiving function, or a communication function in the foregoing method embodiments.

Optionally, the communications apparatus 800 may include one or more memories 802. The memory 802 may store instructions 804, and the instructions may be run on the processor, so that the communications apparatus 800 performs the methods described in the foregoing method embodiments. Optionally, the memory may further store data. Optionally, the processor may further store instructions and/or data. The processor and the memory may be separately disposed, or may be integrated together. For example, various correspondences described in the foregoing method embodiments may be stored in the memory, or may be stored in the processor.

Optionally, the communications apparatus 800 may further include a transceiver 805 and/or an antenna 806. The processor 801 may be referred to as a processing unit, and controls the communications apparatus (a terminal device or a network device). The transceiver 805 may be referred to as a transceiver unit, a transceiver machine, a transceiver circuit, a transceiver, or the like, and is configured to implement receiving and sending functions of the communications apparatus.

In a possible design, a communications apparatus 800 (for example, an integrated circuit, a wireless device, a circuit module, a network device, or a terminal) may include a processor 801 and a transceiver 805. The transceiver 805 sends, at a first time domain position, scheduling information, and sends or receives, at a second time domain position, data scheduled by using the scheduling information. The processor 801 determines the second time domain position based on an end position of the first time domain position and/or a capability of the terminal device.

The processor and the transceiver described in this application may be implemented on an integrated circuit (integrated circuit, IC), an analog IC, a radio frequency integrated circuit RFIC, a hybrid signal IC, an application-specific integrated circuit (application specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

In the descriptions of the foregoing embodiments, the communications apparatus is described by using the network device or the terminal device as an example. However, a scope of the communications apparatus described in this application is not limited to the example, and a structure of the communications apparatus may not be limited by FIG. 8. The communications apparatus may be an independent device or may be a part of a relatively large device. For example, the device may be:
(1) an independent integrated circuit IC, a chip, or a chip system or subsystem;
(2) a set including one or more ICs, where optionally, the IC set may further include a storage component configured to store data and/or instructions;
(3) an ASIC, for example, a modem (MSM);
(4) a module that can be embedded in another device;
(5) a receiver machine, a terminal, an intelligent terminal, a cellular phone, a wireless device, a handheld phone, a mobile unit, a vehicle-mounted device, a network device, a cloud device, an artificial intelligence device, or the like;
(6) another device or the like.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The various illustrative logical units and circuits described in the embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in the embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor, so that the processor may read information from the storage medium and write information into the storage medium. Alternatively, the storage medium may further be integrated into a processor. The processor and the storage medium may be disposed in an ASIC, and the ASIC may be disposed in a terminal device. Alternatively, the processor and the storage medium may also be disposed in different components of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A communication method, wherein the method comprises:
sending (603), by a first terminal device (1021), second information to a network device (101), wherein the second information comprises a radio frequency bandwidth supported by the first terminal device;
receiving (301), by the first terminal device (1021), first information sent by the network device (101), wherein the first information is used to configure a plurality of BWP sets; each BWP set comprises a respective first BWP and a respective second BWP; and the first BWPs are to-be-used for communication between the first terminal device and the network device, and the second BWPs are to-be-used for communication between the first terminal device and a second terminal device; and
communicating (302), by the first terminal device (1021), on at least one first first BWP and/or at least one first second BWP in a first BWP set of the plurality of BWP sets;
wherein, for each BWP set, an offset value between a first frequency domain position and a second frequency domain position in frequency domain is less than or equal to the radio frequency bandwidth supported by the first terminal device (1021); and
the first frequency domain position is a highest frequency domain position of the respective first and second BWPs in the BWP set in frequency domain; and the second frequency domain position is a lowest frequency domain position of the respective first and second BWPs in the BWP set in frequency domain.

2. The method according to claim 1, wherein
the first first BWP is used for uplink communication between the first terminal device (1021) and the network device (101), and the first second BWP is used for uplink communication between the first terminal device and the second terminal device (1022).

3. The method according to claim 2, wherein
the first BWP set further comprises a third BWP, and the third BWP is used for downlink communication between the first terminal device (1021) and the network device (101).

4. The method according to any one of claims 1 to 3, wherein the method further comprises:
sending (601), by the first terminal device (1021), third information to the network device (101), wherein the third information is used to indicate whether the first terminal device supports communication on the first first BWP and the first second BWP at the same time.

5. The method according to any one of claims 1 to 4, wherein the method further comprises:
receiving (606), by the first terminal device (1021), fourth information, wherein the fourth information is used to indicate to activate the at least one first first BWP or the at least one first second BWP; and
activating, by the first terminal device (1021), the at least one first first BWP and the at least one first second BWP based on the fourth information.

6. The method according to any one of claims 1 to 5, wherein frame structure parameters of the at least one first first BWP and the at least one first second BWP are different; and
the communicating (302), by the first terminal device (1021), on at least one first first BWP or at least one first second BWP in the first BWP set comprises:
choosing, by the first terminal device (1021) based on priorities of the frame structure parameters of the at least one first first BWP and the at least one first second BWP, to communicate on the at least one first first BWP or the at least one first second BWP.

7. A communication method, wherein the method comprises:
receiving (603), by a network device (101), second information sent by a first terminal device (1021), wherein the second information comprises a radio frequency bandwidth supported by the first terminal device; and
sending (301), by the network device (101), first information to the first terminal device (1021), wherein the first information is used to configure a plurality of BWP sets; wherein each BWP set comprises a respective first BWP and a respective second BWP; and the first BWPs are to-be-used for communication between the first terminal device and the network device, and the second BWPs are to-be-used for communication between the first terminal device and a second terminal device
wherein the sending (301), by the network device (101), first information to the first terminal device (1021) comprises:
sending, by the network device, the first information to the first terminal device based on the radio frequency bandwidth supported by the first terminal device,
wherein, for each BWP set, an offset value between a first frequency domain position and a second frequency domain position in frequency domain is less than or equal to the radio frequency bandwidth supported by the first terminal device (1021); and
the first frequency domain position is a highest frequency domain position of the respective first and second BWPs in the BWP set in frequency domain; and the second frequency domain position is a lowest frequency domain position of the respective first and second BWPs in the BWP set in frequency domain.

8. The method according to claim 7, wherein
a first first BWP of a first BWP set of the plurality of BWP sets is used for uplink communication between the first terminal device (1021) and the network device (101), and a first second BWP of the first BWP set is used for uplink communication between the first terminal device and the second terminal device (1022).

9. The method according to claim 8, wherein
the first BWP set further comprises a third BWP, and the third BWP is used for downlink communication between the first terminal device (1021) and the network device (101).

10. The method according to any one of claims 7 to 9, wherein the method further comprises:
receiving (601), by the network device (101), third information sent by the first terminal device (1021), wherein the third information is used to indicate whether the first terminal device supports communication on a first first BWP of a first BWP set of the plurality of BWP sets and a first second BWP of the first BWP set at the same time; and
the sending (301), by a network device (101), first information to a first terminal device (1021) comprises: sending, by the network device, the first information to the first terminal device based on the third information if determining that the first terminal device supports communication on the first first BWP and the first second BWP at the same time.

11. The method according to any one of claims 7 to 10, wherein the method further comprises:
sending (606), by the network device (101), fourth information to the first terminal device (1021), wherein the fourth information is used to indicate to activate the at least one first first BWP or the at least one first second BWP.

12. An apparatus, configured to perform the method according to any one of claims 1 to 11.

13. A computer program product, wherein when the computer program product runs on a computer, the computer is enabled to perform the method according to any one of claims 1 to 11.

## Patentansprüche

1. Kommunikationsverfahren, wobei das Verfahren umfasst:
Senden (603), durch ein erstes Endgerät (1021), von zweiten Informationen an ein Netzwerkgerät (101), wobei die zweiten Informationen eine durch das erste Endgerät unterstützte Funkfrequenzbandbreite umfassen;
Empfangen (301), durch das erste Endgerät (1021), von durch das Netzwerkgerät (101) gesandten ersten Informationen, wobei die ersten Informationen zum Konfigurieren einer Vielzahl von BWP-Sätzen verwendet werden, jeder BWP-Satz einen jeweiligen ersten BWP und einen jeweiligen zweiten BWP umfasst; und die ersten BWPs für Kommunikation zwischen dem ersten Endgerät und dem Netzwerkgerät verwendet werden sollen und die zweiten BWPs für Kommunikation zwischen dem ersten Endgerät und einem zweiten Endgerät verwendet werden sollen; und
Kommunizieren (302), durch das erste Endgerät (1021), auf mindestens einem ersten ersten BWP und/oder mindestens einem ersten zweiten BWP in einem ersten BWP-Satz der Vielzahl von BWP-Sätzen;
wobei, für jeden BWP-Satz, ein Versatzwert zwischen einer ersten Frequenzdomänenposition und einer zweiten Frequenzdomänenposition in der Frequenzdomäne kleiner als die oder gleich der durch das erste Endgerät (1021) unterstützten Funkfrequenzbandbreite ist; und
die erste Frequenzdomänenposition eine höchste Frequenzdomänenposition der jeweiligen ersten und zweiten BWPs in dem BWP-Satz in der Frequenzdomäne ist; und die zweite Frequenzdomänenposition eine niedrigste Frequenzdomänenposition der jeweiligen ersten und zweiten BWPs in dem BWP-Satz in der Frequenzdomäne ist.

2. Verfahren nach Anspruch 1, wobei
der erste erste BWP für Aufwärtsstreckenkommunikation zwischen dem ersten Endgerät (1021) und dem Netzwerkgerät (101) verwendet wird und der erste zweite BWP für Aufwärtsstreckenkommunikation zwischen dem ersten Endgerät und dem zweiten Endgerät (1022) verwendet wird.

3. Verfahren nach Anspruch 2, wobei
der erste BWP-Satz ferner einen dritten BWP umfasst und der dritte BWP für Abwärtsstreckenkommunikation zwischen dem ersten Endgerät (1021) und dem Netzwerkgerät (101) verwendet wird.

4. Verfahren nach einem der Ansprüche 1 bis 3, wobei das Verfahren ferner umfasst:
Senden (601), durch das erste Endgerät (1021), von dritten Informationen an das Netzwerkgerät (101), wobei die dritten Informationen verwendet werden, anzugeben, ob das erste Endgerät Kommunikation auf dem ersten ersten BWP und dem ersten zweiten BWP zur selben Zeit unterstützt.

5. Verfahren nach einem der Ansprüche 1 bis 4, wobei das Verfahren ferner umfasst:
Empfangen (606), durch das erste Endgerät (1021), von vierten Informationen, wobei die vierten Informationen verwendet werden, anzugeben, den mindestens einen ersten ersten BWP oder den mindestens einen ersten zweiten BWP zu aktivieren; und
Aktivieren, durch das erste Endgerät (1021), des mindestens einen ersten ersten BWP und des mindestens einen ersten zweiten BWP basierend auf den vierten Informationen.

6. Verfahren nach einem der Ansprüche 1 bis 5, wobei Framestrukturparameter des mindestens einen ersten ersten BWP und des mindestens einen ersten zweiten BWP verschieden sind; und
das Kommunizieren (302), durch das erste Endgerät (1021), auf mindestens einem ersten ersten BWP oder mindestens einem ersten zweiten BWP in dem ersten BWP-Satz umfasst:
Wählen, durch das erste Endgerät (1021) basierend auf Prioritäten der Framestrukturparameter des mindestens einen ersten ersten BWP und des mindestens einen ersten zweiten BWP, auf dem mindestens einen ersten ersten BWP oder dem mindestens einen ersten zweiten BWP zu kommunizieren.

7. Kommunikationsverfahren, wobei das Verfahren umfasst:
Empfangen (603), durch ein Netzwerkgerät (101), von durch ein erstes Endgerät (1021) gesandten zweiten Informationen, wobei die zweiten Informationen eine durch das erste Endgerät unterstützte Funkfrequenzbandbreite umfassen; und
Senden (301), durch das Netzwerkgerät (101), von ersten Informationen an das erste Endgerät (1021), wobei die ersten Informationen zum Konfigurieren einer Vielzahl von BWP-Sätzen verwendet werden, wobei jeder BWP-Satz einen jeweiligen ersten BWP und einen jeweiligen zweiten BWP umfasst; und die ersten BWPs für Kommunikation zwischen dem ersten Endgerät und dem Netzwerkgerät verwendet werden sollen und die zweiten BWPs für Kommunikation zwischen dem ersten Endgerät und einem zweiten Endgerät verwendet werden sollen;
wobei das Senden (301), durch das Netzwerkgerät (101), von ersten Informationen an das erste Endgerät (1021) umfasst:
Senden, durch das Netzwerkgerät, der ersten Informationen an das erste Endgerät basierend auf der durch das erste Endgerät unterstützten Funkfrequenzbandbreite,
wobei, für jeden BWP-Satz, ein Versatzwert zwischen einer ersten Frequenzdomänenposition und einer zweiten Frequenzdomänenposition in der Frequenzdomäne kleiner als die oder gleich der durch das erste Endgerät (1021) unterstützten Funkfrequenzbandbreite ist; und
die erste Frequenzdomänenposition eine höchste Frequenzdomänenposition der jeweiligen ersten und zweiten BWPs in dem BWP-Satz in der Frequenzdomäne ist; und die zweite Frequenzdomänenposition eine niedrigste Frequenzdomänenposition der jeweiligen ersten und zweiten BWPs in dem BWP-Satz in der Frequenzdomäne ist.

8. Verfahren nach Anspruch 7, wobei
ein erster erster BWP eines ersten BWP-Satzes der Vielzahl von BWP-Sätzen für Aufwärtsstreckenkommunikation zwischen dem ersten Endgerät (1021) und dem Netzwerkgerät (101) verwendet wird und ein erster zweiter BWP des ersten BWP-Satzes für Aufwärtsstreckenkommunikation zwischen dem ersten Endgerät und dem zweiten Endgerät (1022) verwendet wird.

9. Verfahren nach Anspruch 8, wobei
der erste BWP-Satz ferner einen dritten BWP umfasst und der dritte BWP für Abwärtsstreckenkommunikation zwischen dem ersten Endgerät (1021) und dem Netzwerkgerät (101) verwendet wird.

10. Verfahren nach einem der Ansprüche 7 bis 9, wobei das Verfahren ferner umfasst:
Empfangen (601), durch das Netzwerkgerät (101), von durch das erste Endgerät (1021) gesandten dritten Informationen, wobei die dritten Informationen verwendet werden, anzugeben, ob das erste Endgerät Kommunikation auf einem ersten ersten BWP eines ersten BWP-Satzes der Vielzahl von BWP-Sätzen und einem ersten zweiten BWP des ersten BWP-Satzes zur selben Zeit unterstützt; und
das Senden (301), durch ein Netzwerkgerät (101), von ersten Informationen an ein erstes Endgerät (1021) umfasst: Senden, durch das Netzwerkgerät, der ersten Informationen an das erste Endgerät basierend auf den dritten Informationen, wenn bestimmt wird, dass das erste Endgerät Kommunikation auf dem ersten ersten BWP und dem ersten zweiten BWP zur selben Zeit unterstützt.

11. Verfahren nach einem der Ansprüche 7 bis 10, wobei das Verfahren ferner umfasst:
Senden (606), durch das Netzwerkgerät (101), von vierten Informationen an das erste Endgerät (1021), wobei die vierten Informationen verwendet werden, anzugeben, den mindestens einen ersten ersten BWP oder den mindestens einen ersten zweiten BWP zu aktivieren.

12. Vorrichtung, konfiguriert zum Durchführen des Verfahrens nach einem der Ansprüche 1 bis 11.

13. Computerprogrammprodukt, wobei, wenn das Computerprogrammprodukt auf einem Computer ausgeführt wird, der Computer in die Lage versetzt wird, das Verfahren nach einem der Ansprüche 1 bis 11 durchzuführen.

## Revendications

1. Procédé de communication, le procédé comprenant :
l'envoi (603), par un premier dispositif de terminal (1021), de deuxièmes informations à un dispositif de réseau (101), dans lequel les deuxièmes informations comprennent une largeur de bande de radiofréquence prise en charge par le premier dispositif de terminal ;
la réception (301), par le premier dispositif de terminal (1021), de premières informations envoyées par le dispositif de réseau (101), dans lequel les premières informations sont utilisées pour configurer une pluralité d'ensembles de BWP ; chaque ensemble de BWP comprend une première BWP respective et une deuxième BWP respective ; et les premières BWP sont destinées à être utilisées pour la communication entre le premier dispositif de terminal et le dispositif de réseau, et les deuxièmes BWP sont destinées à être utilisées pour la communication entre le premier dispositif de terminal et un second dispositif de terminal ; et
la communication (302), par le premier dispositif de terminal (1021), sur au moins une première première BWP et/ou au moins une première deuxième BWP dans un premier ensemble de BWP de la pluralité d'ensembles de BWP ;
dans lequel, pour chaque ensemble de BWP, une valeur de décalage entre une première position en domaine de fréquence et une seconde position en domaine de fréquence, en domaine de fréquence, est inférieure ou égale à la largeur de bande de radiofréquence prise en charge par le premier dispositif de terminal (1021) ; et
la première position en domaine de fréquence est une position en domaine de fréquence la plus haute des première et deuxième BWP respectives dans l'ensemble de BWP en domaine de fréquence ; et la seconde position en domaine de fréquence est une position en domaine de fréquence la plus basse des première et deuxième BWP respectives dans l'ensemble de BWP en domaine de fréquence.

2. Procédé selon la revendication l, dans lequel
la première première BWP est utilisée pour la communication en liaison montante entre le premier dispositif de terminal (1021) et le dispositif de réseau (101), et la première deuxième BWP est utilisée pour la communication en liaison montante entre le premier dispositif de terminal et le second dispositif de terminal (1022).

3. Procédé selon la revendication 2, dans lequel
le premier ensemble de BWP comprend en outre une troisième BWP, et la troisième BWP est utilisée pour la communication en liaison descendante entre le premier dispositif de terminal (1021) et le dispositif de réseau (101).

4. Procédé selon l'une quelconque des revendications 1 à 3, le procédé comprenant en outre :
l'envoi (601), par le premier dispositif de terminal (1021), de troisièmes informations au dispositif de réseau (101), dans lequel les troisièmes informations sont utilisées pour indiquer si le premier dispositif de terminal prend en charge ou non la communication sur la première première BWP et la première deuxième BWP en même temps.

5. Procédé selon l'une quelconque des revendications 1 à 4, le procédé comprenant en outre :
la réception (606), par le premier dispositif de terminal (1021), de quatrièmes informations, dans lequel les quatrièmes informations sont utilisées pour indiquer d'activer l'au moins une première première BWP ou l'au moins une première deuxième BWP ; et
l'activation, par le premier dispositif de terminal (1021), de l'au moins une première première BWP et de l'au moins une première deuxième BWP sur la base des quatrièmes informations.

6. Procédé selon l'une quelconque des revendications 1 à 5, dans lequel des paramètres de structure de trame de l'au moins une première première BWP et de l'au moins une première deuxième BWP sont différents ; et
la communication (302), par le premier dispositif de terminal (1021), sur au moins une première première BWP ou au moins une première deuxième BWP dans le premier ensemble de BWP comprend :
la sélection, par le premier dispositif de terminal (1021), sur la base de priorités des paramètres de structure de trame de l'au moins une première première BWP et de l'au moins une première deuxième BWP, pour communiquer sur l'au moins une première première BWP ou l'au moins une première deuxième BWP.

7. Procédé de communication, le procédé comprenant :
la réception (603), par un dispositif de réseau (101), de deuxièmes informations envoyées par un premier dispositif de terminal (1021), dans lequel les deuxièmes informations comprennent une largeur de bande de radiofréquence prise en charge par le premier dispositif de terminal ; et
l'envoi (301), par le dispositif de réseau (101), de premières informations au premier dispositif de terminal (1021), dans lequel les premières informations sont utilisées pour configurer une pluralité d'ensembles de BWP ; dans lequel chaque ensemble de BWP comprend une première BWP respective et une deuxième BWP respective ; et les premières BWP sont destinées à être utilisées pour la communication entre le premier dispositif de terminal et le dispositif de réseau, et les deuxièmes BWP sont destinées à être utilisées pour la communication entre le premier dispositif de terminal et un second dispositif de terminal
dans lequel l'envoi (301), par le dispositif de réseau (101), de premières informations au premier dispositif de terminal (1021) comprend :
l'envoi, par le dispositif de réseau, des premières informations au premier dispositif de terminal, sur la base de la largeur de bande de radiofréquence prise en charge par le premier dispositif de terminal,
dans lequel, pour chaque ensemble de BWP, une valeur de décalage entre une première position en domaine de fréquence et une seconde position en domaine de fréquence, en domaine de fréquence, est inférieure ou égale à la largeur de bande de radiofréquence prise en charge par le premier dispositif de terminal (1021) ; et
la première position en domaine de fréquence est une position en domaine de fréquence la plus haute des première et deuxième BWP respectives dans l'ensemble de BWP en domaine de fréquence ; et la seconde position en domaine de fréquence est une position en domaine de fréquence la plus basse des première et deuxième BWP respectives dans l'ensemble de BWP en domaine de fréquence.

8. Procédé selon la revendication 7, dans lequel
une première première BWP d'un premier ensemble de BWP de la pluralité d'ensembles de BWP est utilisée pour la communication en liaison montante entre le premier dispositif de terminal (1021) et le dispositif de réseau (101), et une première deuxième BWP du premier ensemble de BWP est utilisée pour la communication en liaison montante entre le premier dispositif de terminal et le second dispositif de terminal (1022).

9. Procédé selon la revendication 8, dans lequel
le premier ensemble de BWP comprend en outre une troisième BWP, et la troisième BWP est utilisée pour la communication en liaison descendante entre le premier dispositif de terminal (1021) et le dispositif de réseau (101).

10. Procédé selon l'une quelconque des revendications 7 à 9, le procédé comprenant en outre :
la réception (601), par le dispositif de réseau (101), de troisièmes informations envoyées par le premier dispositif de terminal (1021), dans lequel les troisièmes informations sont utilisées pour indiquer si le premier dispositif de terminal prend en charge ou non la communication sur une première première BWP d'un premier ensemble de BWP de la pluralité d'ensembles de BWP et une première deuxième BWP du premier ensemble de BWP en même temps ; et
l'envoi (301), par un dispositif de réseau (101), de premières informations à un premier dispositif de terminal (1021) comprenant : l'envoi, par le dispositif de réseau, des premières informations au premier dispositif de terminal, sur la base des troisièmes informations, s'il est déterminé que le premier dispositif de terminal prend en charge la communication sur la première première BWP et la première deuxième BWP en même temps.

11. Procédé selon l'une quelconque des revendications 7 à 10, le procédé comprenant en outre :
l'envoi (606), par le dispositif de réseau (101), de quatrièmes informations au premier dispositif de terminal (1021), dans lequel les quatrièmes informations sont utilisées pour indiquer d'activer l'au moins une première première BWP ou l'au moins une première deuxième BWP.

12. Appareil, configuré pour réaliser le procédé selon l'une quelconque des revendications 1 à 11.

13. Produit programme d'ordinateur, dans lequel, lorsque le produit programme d'ordinateur est exploité sur un ordinateur, l'ordinateur est capable de réaliser le procédé selon l'une quelconque des revendications 1 à 11.
